(19) Europäisches Patentamt
European Patent Office
Office européen des brevets

(11) EP 2 634 217 A1

(12) **EUROPEAN PATENT APPLICATION**
published in accordance with Art. 153(4) EPC

(43) Date of publication:
**04.09.2013 Bulletin 2013/36**

(21) Application number: **11836430.6**

(22) Date of filing: **21.10.2011**

(51) Int Cl.:
***C08L 67/04*** *(2006.01)* ***C08K 3/00*** *(2006.01)*
***C08K 5/5357*** *(2006.01)* ***C08L 101/00*** *(2006.01)*

(86) International application number:
**PCT/JP2011/074885**

(87) International publication number:
**WO 2012/057297 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2010 JP 2010241009**
**27.10.2010 JP 2010241008**

(71) Applicant: **Teijin Limited**
**Osaka-shi, Osaka 541-0054 (JP)**

(72) Inventor: **YAMANAKA, Katsuhiro**
**Tokyo 100-0013 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **FLAME-RETARDANT RESIN COMPOSITION AND MOLDED ARTICLE PRODUCED FROM SAME**

(57) A flame retardant resin composition which is obtained by using a plant-derived raw material and excellent in flame retardancy, heat resistance and impact resistance, and a molded article thereof.

The flame retardant resin composition comprises:
(A) 100 parts by weight of a resin component (component A) containing at least 50 wt% of polylactic acid (component A-1);
(B) 1 to 100 parts by weight of an organic phosphorus compound represented by the following formula (1) (component B);
(C) 1 to 200 parts by weight of a filler (component C);
and
(D) 1 to 100 parts by weight of an impact resistance modifier (component D).

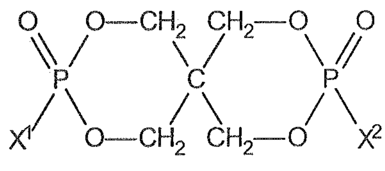

(1)

(In the above formula, $X^1$ and $X^2$ are the same or different and each an aromatic substituted alkyl group represented by the following formula (2):

$$-(AL)-(Ar)_n \qquad (2)$$

(In the above formula, AL is a branched or linear alkyl group having 1 to 5 carbon atoms, Ar is a phenyl group, naphthyl group or anthryl group all of which may have a substituent, "n" is an integer of 1 to 3, and Ar may be bonded to any carbon atom contained in AL.))

EP 2 634 217 A1

**Description**

TECHNICAL FIELD

The present invention relates to a resin composition which is excellent in flame retardancy, heat resistance and impact resistance and to a molded article thereof. More specifically, it relates to a flame retardant resin composition which comprises a specific organic phosphorus compound and is substantially halogen-free and to a molded article thereof.

BACKGROUND ART

Resins such as polypropylenes (PP), acrylonitrile-butadiene-styrene (ABS), polyamides (PA6, PA66), polyesters (PET, PBT) and polycarbonates (PC) are generally used as raw materials for obtaining resin molded articles. These resins are produced from raw materials obtained from oil resources. In recent years, problems such as the depletion of oil resources and global environment have been concerned, and the production of a resin from a raw material obtained from biogenic matter such as a plant has been desired. Especially when a global environmental problem is taken into consideration, a resin obtained from a plant-derived raw material is regarded as a resin having a low burden on the global environment from the concept "carbon neutral" which means that the balance of carbon is neutral in view of the amount of carbon dioxide absorbed during the growth of a plant even when it is burnt after use.

Meanwhile, to use a resin obtained from a plant-derived raw material as an industrial material, especially an electric/electronic-related part, an OA-related part or an auto part, flame retardancy must be provided to the resin from the viewpoint of safety.

Various attempts have been made for the flame retardation of resins obtained from a plant-derived raw material, especially polylactic acid resin, and a certain measure of flame retardation has been achieved (Patent Documents 1 to 6). However, a large amount of a flame retardant is used to flame retard these resins, whereby the physical properties and heat resistance of the resins are impaired due to the characteristic properties of the flame retardant.

(Patent Document 1) JP-A 2001-164014
(Patent Document 2) JP-A 2004-277552
(Patent Document 3) JP-A 2005-023260
(Patent Document 4) JP-A 2005-139441
(Patent Document 5) JP-A 2007-246730
(Patent Document 6) JP-A 2008-019294

DISCLOSURE OF THE INVENTION

It is a first object of the present invention to provide a resin composition which comprises a plant-derived resin and is excellent in flame retardancy, heat resistance and impact resistance, and a molded article thereof. It is a second object of the present invention to provide a flame retardant resin composition which comprises a specific phosphorus compound and is substantially halogen-free, and a molded article thereof.

The above objects of the present invention are attained by the following invention.

1. A flame retardant resin composition comprising:

(A) 100 parts by weight of a resin component (component A) containing at least 50 wt% of polylactic acid (component A-1) ;
(B) 1 to 100 parts by weight of an organic phosphorus compound represented by the following formula (1) (component B);
(C) 1 to 200 parts by weight of a filler (component C) ; and
(D) 1 to 100 parts by weight of an impact resistance modifier (component D).

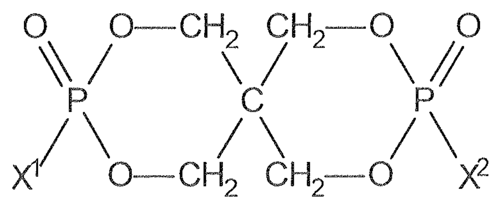

··· (1)

(In the above formula, $X^1$ and $X^2$ are the same or different and each an aromatic substituted alkyl group represented by the following formula (2) :

$$-(AL)-(Ar)_n \quad \cdots (2)$$

(In the above formula, AL is a branched or linear aliphatic hydrocarbon group having 1 to 5 carbon atoms, Ar is a phenyl group, naphthyl group or anthryl group all of which may have a substituent, "n" is an integer of 1 to 3, and Ar may be bonded to any carbon atom contained in AL.))

2. The flame retardant resin composition in the above paragraph 1, wherein the polylactic acid (component A-1) is stereocomplex polylactic acid which contains poly (L-lactic acid) (component $\alpha$-1) comprising not less than 90 mol% of an L-lactic acid unit and poly(D-lactic acid) (component $\beta$-1) comprising not less than 90 mol% of a D-lactic acid unit, and the weight ratio of the component $\alpha$-1 to the component $\beta$-1 is 10:90 to 90:10.
3. The flame retardant resin composition in the above paragraph 1, wherein the component A-1 has a proportion of melting peaks at 195°C or higher of not less than 80 % of the total of all the melting peaks in the temperature elevation step in differential scanning calorimeter (DSC) measurement.
4. The flame retardant resin composition in the above paragraph 1 which comprises at least one resin (component A-2) selected from the group consisting of polyester resin (PEst) except for the component A-1, polyphenylene ether resin (PPE), polycarbonate resin (PC), polyamide resin (PA), polyolefin resin (PO), styrene-based resin, polyphenylene sulfide resin (PPS) and polyether imide resin (PEI) as the resin component (component A).
5. The flame retardant resin composition in the above paragraph 1, wherein the organic phosphorus compound (component B) is at least one compound selected from the group consisting of organic phosphorus compounds represented by the following formula (3) and the following formula (4).

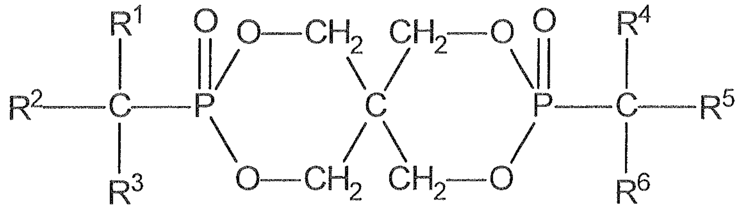

··· (3)

(In the above formula, $R^2$ and $R^5$ may be the same or different and are each a phenyl group, naphthyl group or anthryl group all of which may have a substituent, and $R^1$, $R^3$, $R^4$ and $R^6$ may be the same or different and are each a hydrogen atom, branched or linear alkyl group having 1 to 4 carbon atoms or substituent selected from phenyl group, naphthyl group and anthryl group all of which may have a substituent.)

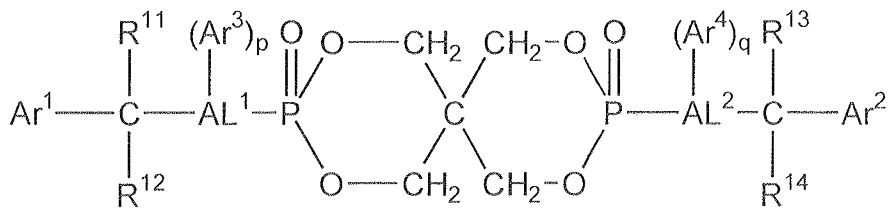

··· (4)

(In the above formula, $Ar^1$ and $Ar^2$ may be the same or different and are each a phenyl group, naphthyl group or anthryl group all of which may have a substituent in the aromatic ring, $R^{11}$, $R^{12}$, $R^{13}$ and $R^{14}$ may be the same or different and are each a hydrogen atom, aliphatic hydrocarbon group having 1 to 3 carbon atoms, or phenyl group, naphthyl group or anthryl group all of which may have a substituent in the aromatic ring, $AL^1$ and $AL^2$ may be the same or different and are each a branched or linear aliphatic hydrocarbon group having 1 to 4 carbon atoms, $Ar^3$ and $Ar^4$ may be the same or different and are each a phenyl group, naphthyl group or anthryl group all of which may have a substituent in the aromatic ring, "p" and "q" are each an integer of 0 to 3, and $Ar^3$ and $Ar^4$ may be bonded to any carbon atom in $AL^1$ and $AL^2$, respectively.)
6. The flame retardant resin composition in the above paragraph 1, wherein the organic phosphorus compound

(component B) is represented by the following formula (5).

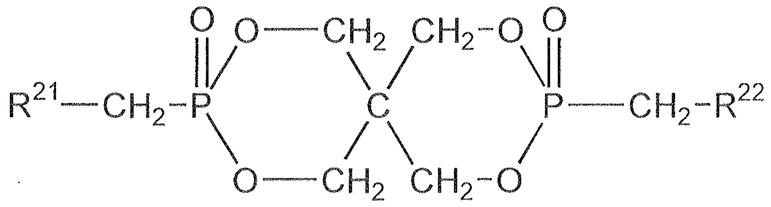

··· (5)

(In the above formula, $R^{21}$ and $R^{22}$ are the same or different and each a phenyl group, naphthyl group or anthryl group all of which may have a substituent in the aromatic ruing.)

7. The flame retardant resin composition in the above paragraph 1, wherein the organic phosphorus compound (component B) is a compound represented by the following formula (1-a) .

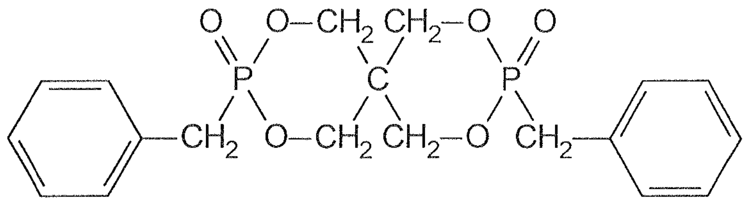

··· (1 − a)

8. The flame retardant resin composition in the above paragraph 1, wherein the organic phosphorus compound (component B) is represented by the following formula (6).

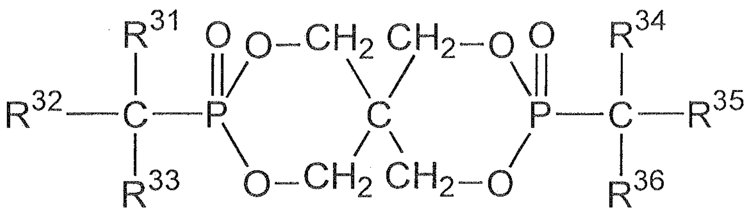

··· (6)

(In the above formula, $R^{31}$ and $R^{34}$ may be the same or different and are each a hydrogen atom or aliphatic hydrocarbon group having 1 to 3 carbon atoms, $R^{33}$ and $R^{36}$ may be the same or different and are each an aliphatic hydrocarbon group having 1 to 4 carbon atoms, and $R^{32}$ and $R^{35}$ may be the same or different and are each a phenyl group, naphthyl group or anthryl group all of which may have a substituent in the aromatic ring.)

9. The flame retardant resin composition in the above paragraph 1, wherein the organic phosphorus compound (component B) is a compound represented by the following formula (1-b).

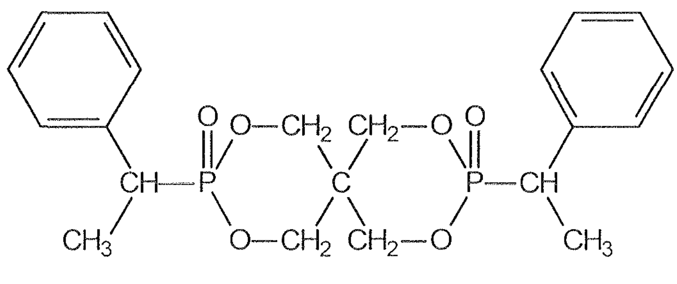

(1-b)

10. The flame retardant resin composition in the above paragraph 1, wherein the organic phosphorus compound (component B) is represented by the following formula (7) .

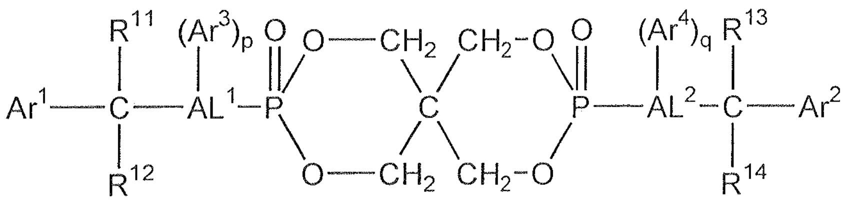

(7)

(In the above formula, $Ar^1$ and $Ar^2$ may be the same or different and are each a phenyl group, naphthyl group or anthryl group all of which may have a substituent in the aromatic ring, $R^{11}$, $R^{12}$, $R^{13}$ and $R^{14}$ may be the same or different and are each a hydrogen atom, aliphatic hydrocarbon group having 1 to 3 carbon atoms, or phenyl group, naphthyl group or anthryl group all of which may have a substituent in the aromatic ring, $AL^1$ and $AL^2$ may be the same or different and are each a branched or linear aliphatic hydrocarbon group having 1 to 4 carbon atoms, $Ar^3$ and $Ar^4$ may be the same or different and are each a phenyl group, naphthyl group or anthryl group all which may have a substituent in the aromatic ring, "p" and "q" are each an integer of 0 to 3, and $Ar^3$ and $Ar^4$ may be bonded to any carbon atom in $AL^1$ and $AL^2$, respectively.)

11. The flame retardant resin composition in the above paragraph 1, wherein the organic phosphorus compound (component B) is a compound represented by the following formula (1-c).

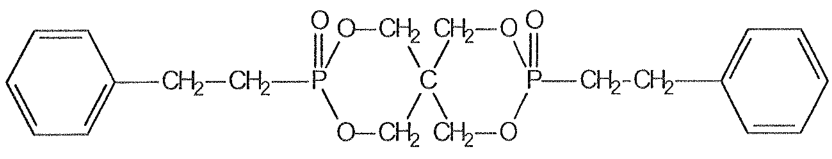

(1-c)

12. The flame retardant resin composition in the above paragraph 1, wherein the organic phosphorus compound (component B) is represented by the following formula (8).

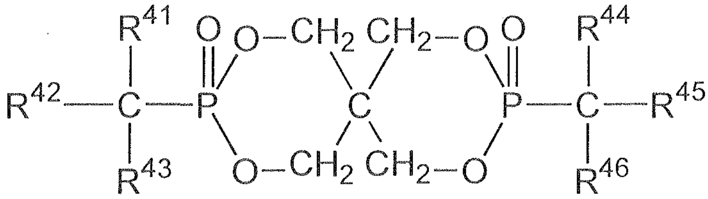

(8)

(In the above formula, $R^{41}$ and $R^{44}$ may be the same or different and are each a hydrogen atom, aliphatic hydrocarbon group having 1 to 4 carbon atoms, or phenyl group, naphthyl group or anthryl group all of which may have a substituent in the aromatic ring, and $R^{42}$, $R^{43}$, $R^{45}$ and $R^{46}$ may be the same or different and are each a phenyl group, naphthyl group or anthryl group all of which may have a substituent in the aromatic ring.)

13. The flame retardant resin composition in the above paragraph 1, wherein the organic phosphorus compound (component B) is a compound represented by the following formula (1-d).

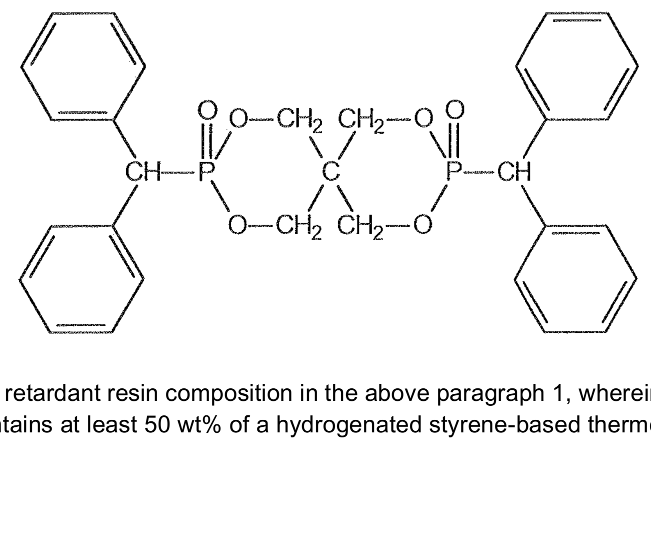

(1-d)

14. The flame retardant resin composition in the above paragraph 1, wherein the impact resistance modifier (component D) contains at least 50 wt% of a hydrogenated styrene-based thermoplastic elastomer.

15. The flame retardant resin composition in the above paragraph 1, wherein the impact resistance modifier (component D) contains at least 50 wt% of at least one hydrogenated styrene-based thermoplastic elastomer selected from styrene-ethylene-butylene-styrene terpolymer (SEBS), styrene-ethylene-propylene-styrene terpolymer (SEPS) and styrene-ethylene-propylene-styrene terpolymer (SEEPS).
16. The flame retardant resin composition in the above paragraph 1, wherein the organic phosphorus compound (component B) has an acid value of not more than 0.7 mgKOH/g.
17. The flame retardant resin composition in the above paragraph 1 which comprises 0.01 to 30 parts by weight of a crystallization accelerator based on 100 parts by weight of the resin component (component A).
18. The flame retardant resin composition in the above paragraph 1 which attains at least UL-94 V-2 flammability rating.
19. A molded article formed from the flame retardant resin composition of the above paragraph 1. According to the present invention, a flame retardant resin composition having high flame retardancy is obtained from a plant-derived raw material without impairing the characteristic properties of a resin.

BEST MODE FOR CARRYING OUT THE INVENTION

The flame retardant resin composition of the present invention will be described in detail hereinunder.
The resin component (component A) in the present invention contains at least 50 wt% of polylactic acid (component A-1). Examples of the polylactic acid (component A-1) include polylactic acid (component A-1-1) such as poly (L-lactic acid), poly(D-lactic acid), poly(DL-lactic acid) or a mixture thereof, and stereocomplex polylactic acid (component A-1-2) having a higher melting point than that of the component A-1-1.

(polylactic acid: component A-1-1)

The polylactic acid (component A-1-1) is a polymer obtained from L-lactic acid, D-lactic acid, DL-lactic acid, L-lactide which is a cyclic dimer of L-lactic acid, D-lactide which is a cyclic dimer of D-lactic acid, meso-lactide which is a cyclic dimer of L-lactic acid and D-lactic acid, or a mixture thereof.
Although the process for producing the (polylactic acid (component A-1-1) used in the present invention is not particularly limited, a known melt polymerization process and further a solid-phase polymerization process are generally used in combination to produce the polylactic acid. Specific examples of the process are disclosed by US Patent No. 1,995,970, US Patent No. 2,362,511 and US Patent No. 2,683,136, and the polylactic acid is synthesized through the ring-opening polymerization of a cyclic dimer of lactic acid called "lactide". US Patent No. 2,758,987 discloses a ring-opening polymerization process for melt polymerizing a cyclic dimer of lactic acid (lactide).
The polylactic acid (component A-1-1) may be a copolymer obtained from a lactic acid as the main raw material. Examples of the lactic acid copolymer include lactic acid-hydroxycarboxylic acid copolymers and lactic acid-aliphatic polyhydric alcohol-aliphatic polybasic acid copolymers.
Examples of the hydroxycarboxylic acid used in the lactic acid copolymers include glycolic acid, 3-hydroxybutyric acid, 4-hydroxybutyric acid, 4-hydroxyvaleric acid, 5- hydroxyvaleric acid, 4-hydroxyvaleric acid and 6-hydroxycaproic acid. They may be used alone or in combination of two or more. Cyclic ester intermediates of a hydroxycarboxylic acid such as glycolide which is a dimer of glycolic acid and ε-caprolactone which is a cyclic ester of 6-hydroxycaproic acid may also be used.
Examples of the aliphatic polyhydric alcohol include aliphatic diols such as ethylene glycol, diethylene glycol, triethylene glycol, polyethylene glycol, propylene glycol, dipropylene glycol, 1,3-butanediol, 1,4-butanediol, 3-methyl-1,5-pentanediol, 1,6-hexanediol, 1,9-nonanediol, neopentyl glycol, decamethylene glycol and 1,4-cyclohexanedimethanol. They may be used alone or in combination of two or more.
Examples of the aliphatic polybasic acid include aliphatic dibasic acids such as succinic acid, oxalic acid, malonic acid, glutaric acid, adipic acid, pimelic acid, suberic acid, azelaic acid, sebacic acid, undecanedioic acid and dodecanedioic acid. They may be used alone or in combination of two or more.
A copolymer of lactic acid and hydroxycarboxylic acid is generally synthesized through the ring-opening polymerization of lactide and a cyclic ester intermediate of hydroxycarboxylic acid. The production process thereof is disclosed by US Patent No. 3,635,956 and US Patent No. 3,797,499. US Patent No. 5,310,865 discloses a process in which a mixture of lactic acid and hydroxycarboxylic acid is used as a raw material and is directly subjected to dehydration polycondensation. US Patent No. 4,057,537 discloses a ring-opening polymerization process in which cyclic dimers of lactic acid and an aliphatic hydroxycarboxylic acid, for example, lactide and glycolide, and ε-caprolactone are melt polymerized in the presence of a catalyst. To produce a lactic acid copolymer directly by dehydration polycondensation and not ring-opening polymerization, the lactic acid copolymer having a polymerization degree suitable for use in the present invention is obtained by subjecting a lactic acid and optionally hydroxycarboxylic acid to azeotropic dehydration condensation preferably in the presence of an organic solvent, especially a phenylether-based solvent, and particularly

preferably removing water from a solvent distilled out by azeotropy and returning the substantially anhydrous solvent into a reaction system for polymerization.

US Patent No. 5,428,126 discloses a process in which lactic acid and a mixture of an aliphatic dihydric alcohol and an aliphatic dibasic acid are directly subjected to dehydration condensation. European Patent Publication No. 0712880A2 discloses a process in which polylactic acid and a polymer of an aliphatic dihydric alcohol and an aliphatic dibasic acid are condensed in the presence of an organic solvent.

To produce polylactic acid and a lactic acid copolymer, a suitable molecular weight control agent, a branching agent and a modifier may be added.

In the present invention, polylactic acid which is a polymer of a lactic acid alone is preferably used, and poly (L-lactic acid) resin obtained from L-lactic acid as the main raw material is particularly preferred. In general, L-lactic acid contains D-lactic acid which is an optical isomer, and its content is preferably not more than 15 wt%, more preferably not more than 10 wt%, particularly preferably not more than 5 wt%. When a large amount of the optical isomer is contained, the crystallinity of polylactic acid degrades with the result that the obtained polylactic acid becomes softer. This material is advantageously used for a molded product which is desired to be soft but not preferred for a composition which requires heat resistance.

(stereocomplex polylactic acid: component A-1-2)

The stereocomplex polylactic acid (component A-1-2) is produced by mixing together poly(L-lactic acid) (component α-1) comprising an L-lactic acid unit and poly(D-lactic acid) (component (β-1) comprising a D-lactic acid unit in a solution or molten state as described in JP-A 63-241024 and Macromolecules, 24, 5651 (1991).

The poly(L-lactic acid) as the component α-1 preferably comprises 90 to 100 mol% of an L-lactic acid unit and 0 to 10 mol% of a comonomer unit other than L-lactic acid. The poly(D-lactic acid) as the component β-1 preferably comprises 90 to 100 mol% of a D-lactic acid unit and 0 to 10 mol% of a comonomer unit other than D-lactic acid.

That is, the optical purity of the component α-1 or the component (β-1 is preferably 90 to 100 mol%. When the optical purity is lower than 90 mol%, crystallinity and melting point lower and the formation of stereocomplex becomes difficult. Therefore, the melting point of the component α-1 or the component (β-1 is preferably 160°C or higher, more preferably 170°C or higher, much more preferably 175°C or higher.

From this point of view, the optical purity of lactic acid or lactide which is a polymer raw material is preferably 96 to 100 mol%, more preferably 97.5 to 100 mol%, much more preferably 98.5 to 100 mol%, most preferably 99 to 100 mol%.

The comonomer unit is a D-lactic acid unit in the case of the component α-1 and an L-lactic acid unit in the case of the component (β-1 and may be a unit other than lactic acid.

The amount of the comonomer unit other than the lactic acid unit is 0 to 10 mol%, preferably 0 to 5 mol%, more preferably 0 to 2 mol%, much more preferably 0 to 1 mol%. Examples of the comonomer unit include units derived from dicarboxylic acids, polyhydric alcohols, hydroxycarboxylic acids and lactones all of which have a functional group capable of forming at least two ester bonds, and units derived from polyesters, polyethers and polycarbonates all of which comprise these as constituent components.

The dicarboxylic acids include succinic acid, adipic acid, azelaic acid, sebacic acid, terephthalic acid and isophthalic acid. The polyhydric alcohols include aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol and polypropylene glycol, and aromatic polyhydric alcohols such as an adduct of bisphenol with ethylene oxide. The hydroxycarboxylic acids include glycolic acid and hydroxybutyric acid. The lactones include glycolide, ε-caprolactone, β-propiolactone, δ-butyrolactone, (β- or y-butyrolactone, pivalolactone and δ-valerolactone.

The weight average molecular weight of each of the component α-1 and the component β-1 is preferably 80,000 to 300,000, more preferably 100,000 to 250,000, much more preferably 120,000 to 230,000 in order to obtain both the mechanical properties and moldability of the resin composition of the present invention.

The weight average molecular weight and number average molecular weight of polylactic acid are values measured by gel permeation chromatography (GPC) and calculated in terms of standard polystyrene.

The component α-1 and the component β-1 can be manufactured by a conventionally known process. Examples of the process include the melt ring-opening polymerization of L-lactide or D-lactide, the solid-phase polymerization of polylactic acid having a low molecular weight, and direct polymerization for dehydrating and condensing lactic acid.

The polymerization reaction can be carried out in a conventionally known reactor. For example, vertical reactors or horizontal reactors having high-viscosity agitating elements such as helical ribbon elements can be used alone or in combination. Further, batch, continuous and semi-batch processes may be used alone or in combination.

In the solid-phase polymerization process, it is preferred from the viewpoints of the prevention of the fusion of a pellet and production efficiency that a prepolymer should be crystallized in advance. Polymerization is carried out at a fixed temperature within a temperature range from the glass transition temperature to lower than the melting point of

the prepolymer or by elevating the temperature gradually along with the proceeding of polymerization in a fixed vertical or horizontal reactor, or a reactor (rotary kiln, etc.) whose vessel turns, such as a tumbler or kiln. It is also preferred that the inside pressure of the reactor should be reduced or a heated inert gas stream should be circulated so as to remove produced water efficiently.

The resin composition of the present invention comprises a metal catalyst which is used to produce polylactic acid. The metal catalyst is a compound containing at least one metal element selected from the group consisting of an alkali earth metal, a rare earth metal, a third-period transition metal, aluminum, germanium, tin and antimony. Examples of the alkali earth metal include magnesium, calcium and strontium. Examples of the rare earth element include scandium, yttrium, lanthanum and cerium. Examples of the third-period transition metal include iron, cobalt, nickel and zinc. The metal catalyst is added to the composition as a carboxylate, alkoxide, aryloxide or enolate of (β-diketone of any one of these metals. From the viewpoints of polymerization activity and color, tin octylate, titanium tetraisopropoxide and aluminum triisopropoxide are particularly preferred.

The content of the metal catalyst is preferably 0.001 to 1 part by weight, more preferably 0.005 to 0.1 part by weight based on 100 parts by weight of the polylactic acid (component A-1). When the content of the metal catalyst is too low, the polymerization rate greatly lowers. When the content is too high, coloration by reaction heat, depolymerization or a transesterification reaction is accelerated, whereby the color and heat stability of the obtained composition deteriorate.

An alcohol may be used as a polymerization initiator. The alcohol preferably does not impede the polymerization of the polylactic acid and is nonvolatile, and preferred examples thereof include decanol, dodecanol, tetradecanol, hexadecanol and octadecanol.

The stereocomplex crystal is formed by mixing together the component α-1 and the component β-1. In this case, the weight ratio of the component α-1 to the component β-1 is preferably 90:10 to 10:90, more preferably 75:25 to 25:75, much more preferably 60:40 to 40:60.

That is, stereocomplex polylactic acid (component A-1-2) containing poly(L-lactic acid) (component α-1) comprising not less than 90 mol% of an L-lactic acid unit and poly (D-lactic acid) (component (β-1) comprising not less than 90 mol% of a D-lactic acid unit in a weight ratio of the component α-1 to the component (β-1 of 10:90 to 90:10 is preferred.

The highly stereocomplexed component A-1-2 has a proportion of melting peaks at 195°C or higher of not less than 80 % of the total of all the melting peaks in the temperature elevation step in differential scanning calorimeter (DSC) measurement. The proportion of melting peaks at 195°C or higher is preferably not less than 80 %, more preferably not less than 90 %, most preferably 100 % of the total of all the melting peaks of the component A-1-2. When the proportion of melting peaks at 195°C or higher is less than 80 %, the characteristic properties of a homocrystal derived from poly (L-lactic acid) (component α-1) or poly (D-lactic acid) (component (β-1) appear with the result of unsatisfactory heat resistance.

The melting peak of the component A-1-2 is preferably at 200°C or higher, more preferably at 205°C or higher, much more preferably 210°C or higher.

When poly(L-lactic acid) (component α-1) and poly (D-lactic acid) (component β-1) are existent in the above weight ratio in the highly stereocomplexed component A-1-2, the enantiomer average chain length obtained by 13C-NMR can be advantageously set to a range of 10 to 40, and only the crystal melting peak of stereocomplex-phase polylactic acid is observed without the crystal melting peak of homo-phase polylactic acid.

The enantiomer average chain length (Li) obtained by 13C-NMR is a value defined by the formula (IV) from the area ratios (Iiii, Iisi, Isii, Iiis, Isis, Issi, Iiss and Iss) of the peaks of the tetrad structure of CH carbons of polylactic acid which are attributed in accordance with Makromol. Chem., 1991, 2287 (1990). "i" indicates an isotactic sequence (LL, DD), and "s" indicates a syndiotactic sequence (LD, DL).

$$Li = (3Iiii + 2Iisi + 2Isii + 2Iiis + Isis + Issi + Iiss)/(Iisi + Iiis + Isii + 2Isis + 2Issi + 2Iiss + 3Isss) + 1 \quad (IV)$$

In the present invention, the enantiomer average chain length (Li) is preferably in the range of 10 to 40. When this condition is satisfied, the resin composition can achieve heat resistance, especially preferred releasability.

When the enantiomer average chain length is less than 10, if stereocomplex-phase polylactic acid is highly formed in DSC measurement, the resin composition may be inferior in heat resistance. When the enantiomer average chain length is more than 40, stereocomplex polylactic acid forming ability may deteriorate and further heat resistance may degrade. From the viewpoints of this and the releasability of the composition, the enantiomer average chain length is in the range of preferably 15 to 40, more preferably 18 to 39.

(another resin: component A-2)

A preferred example of a resin component (component A-2) except for the polylactic acid (component A-1) contained in the resin component (component A) is at least one resin component selected from the group consisting of polyester resin (PEst) except for the component A-1, polyphenylene ether resin (PPE), polycarbonate resin (PC), polyamide resin (PA), polyolefin resin (PO), styrene-based resin, polyphenylene sulfide resin (PPS) and polyether imide resin (PEI) . Out of these components A-2, polyester resin (PEst), polyphenylene ether resin (PPE), polycarbonate resin (PC), polyamide resin (PA), polyolefin resin (PO) and styrene-based resin are preferred.

A detailed description is subsequently given of a thermoplastic resin as the component A-2.

(component A-2: polyester resin)

At least one or a mixture of two or more selected from aromatic polyester resins and aliphatic polyester resins may be used as the polyester resin (PEst).

The aromatic polyester resin is a polyester comprising an aromatic dicarboxylic acid as the main dicarboxylic acid component and an aliphatic diol having 2 to 10 carbon atoms as the main glycol component. It comprises preferably not less than 80 mol%, more preferably not less than 90 mol% of an aromatic dicarboxylic acid component based on the total of all dicarboxylic acid components. Meanwhile, it comprises preferably not less than 80 mol%, more preferably not less than 90 mol% of an aliphatic diol component having 2 to 10 carbon atoms based on the total of all the glycol components.

Preferred examples of the aromatic dicarboxylic acid component include terephthalic acid, isophthalic acid, phthalic acid, methylterephthalic acid, methylisophthalic acid and 2, 6-naphthalenedicarboxylic acid. They may be used alone or in combination of two or more. Other dicarboxylic acids except for the above aromatic dicarboxylic acids include aliphatic dicarboxylic acids and alicyclic dicarboxylic acids such as adipic acid, sebacic acid, decanedicarboxylic acid, azelaic acid, dodecanedicarboxylic acid and cyclohexanedicarboxylic acid.

Examples of the aliphatic diol having 2 to 10 carbon atoms include aliphatic diols such as ethylene glycol, trimethylene glycol, tetramethylene glycol, hexamethylene glycol and neopentyl glycol, and alicyclic diols such as 1,4-cyclohexane dimethanol. Other glycols except for the aliphatic diols having 2 to 10 carbon atoms include p,p'-dihydroxyethoxy bisphenol A and polyoxyethylene glycol.

A preferred example of the aromatic polyester resin is a polyester having an ester unit which comprises at least one dicarboxylic acid selected from terephthalic acid and 2,6-naphthalenedicarboxylic acid as the main dicarboxylic acid component and at least one diol selected from ethylene glycol, trimethylene glycol and tetramethylene glycol as the main diol component.

Specifically, the aromatic polyester resin is preferably at least one selected from the group consisting of polyethylene terephthalate resin, polybutylene terephthalate resin, polyethylene naphthalene dicarboxylate resin, polybutylene naphthalene dicarboxylate resin, polycyclohexanedimethyl terephthalate resin, polytrimethylene terephthalate resin and polytrimethylene naphthalene dicarboxylate resin.

It is particularly preferably at least one selected from the group consisting of polyethylene terephthalate resin, polybutylene terephthalate resin and polyethylene naphthalene dicarboxylate resin. It is most preferably polybutylene terephthalate resin.

A polyester elastomer having the above recurring unit as the main recurring unit of a hard segment may also be used as the aromatic polyester resin of the present invention.

An example of the polyester elastomer is a polyester elastomer which comprises tetramethylene terephthalate or tetramethylene-2,6-naphthalene dicarboxylate as the main recurring unit of a hard segment. An example of the soft segment of the polyester elastomer is a polyester which comprises at least one dicarboxylic acid selected from terephthalic acid, isophthalic acid, sebacic acid and adipic acid and at least one diol selected from the group consisting of a long-chain diol having 5 to 10 carbon atoms and $H(OCH_2CH_2)_iOH$ (i = 2 to 5) . The soft segment may be a polyester or polycaprolactone having a melting point of 100°C or lower or noncrystallinity.

The expression "main component" means a component which accounts for not less than 80 mol%, preferably not less than 90 mol% of the total of all the dicarboxylic acid components or all the glycol components, and the expression "main recurring unit" means a recurring unit which accounts for not less than 80 mol%, preferably not less than 90 mol% of the total of all the recurring units.

As for the molecular weight of the aromatic polyester resin in the present invention, the aromatic polyester resin should have an intrinsic viscosity that enables a molded product thereof to be used, preferably 0.5 to 1.6 dl/g, more preferably 0. 6 to 1. 5 dl/g when measured in orthochlorophenol at 35°C.

It is advantageous that the aromatic polyester resin should have a terminal carboxyl group (-COOH) content of 1 to 60 equivalents/T (1 ton of a polymer). This terminal carboxyl group content can be obtained by measuring an m-cresol solution in accordance with a potential difference titration method using an alkali solution.

(component A-2: polyphenylene ether resin)

A resin which is generally known as PPE resin may be used as the polyphenylene ether resin. Examples of PPE resin include homopolymers and/or copolymers such as (2,6-dimethyl-1,4-phenylene)ether, (2,6-diethyl-1,4-phenylene)ether, (2,6-dipropyl-1,4-phenylene)ether, (2-methyl-6-ethyl-1,4-phenylene)ether, (2-methyl-6-propyl-1,4-phenylene)ether and (2,3,6-trimethyl-1,4-phenylene)ether. Poly(2,6-dimethyl-1,4-phenylene)ether is particularly preferred. A graft copolymer obtained by graft polymerizing PPE with a styrene compound may also be used. The method of producing PPE is not particularly limited but PPE can be easily produced by oxidation polymerizing 2, 6-xylenol in the presence of a complex of a cuprous salt and an amine as a catalyst in accordance with the method described in US Patent No. 3,306,874.

The reduced viscosity $\eta_{sp}/C$ (0.5g/dl, toluene solution, measured at 30°C) which is a measure of the molecular weight of PPE resin is preferably 0.2 to 0.7 dl/g, more preferably 0. 3 to 0. 6 dl/g. PPE resin having a reduced viscosity within this range has a good balance between moldability and mechanical properties, and the reduced viscosity can be easily controlled by adjusting the amount of the catalyst at the time of producing PPE.

(component A-2: polycarbonate resin (PC))

The polycarbonate resin (PC) is obtained from an interfacial polymerization reaction between a dihydroxyaryl compound and phosgene in the presence of a solvent such as methylene chloride or from a transesterification reaction between a dihydroxyaryl compound and diphenyl carbonate. Typical PC is a polycarbonate obtained from a reaction between 2,2'-bis(4-hydroxyphenyl)propane and phosgene.

Examples of the dihydroxyaryl compound as a raw material of the polycarbonate resin include bis(4-hydroxyphenyl)methane, 1,1'-bis(4-hydroxyphenyl)ethane, 2,2'-bis(4-hydroxyphenyl)propane, 2,2'-bis(4-hydroxyphenyl)butane, 2,2'-bis(4-hydroxyphenyl)octane, 2,2'-bis(4-hydroxy-3-methylphenyl)propane, 2,2'-bis(4-hydroxy-3-t-butylphenyl) propane, 2,2'-bis(3,5-dimethyl-4-hydroxyphenyl)propane, 2,2'-bis(4-hydroxy-3-cyclohexylphenyl)propane, 2,2'-bis(4-hydroxy-3-methoxyphenyl)propane, 1,1'-bis(4-hydroxyphenyl)cyclopentane, 1,1'-bis(4-hydroxyphenyl)cyclohexane, 1,1'-bis(4-hydroxyphenyl)cyclododecane, 4,4'-dihydroxyphenyl ether, 4,4'-dihydroxy-3,3'-dimethylphenyl ether, 4,4'-dihydroxydiphenyl sulfide, 4,4'-dihydroxy-3,3'-dimethyldiphenyl sulfide, 4,4'-dihydroxydiphenyl sulfoxide, 4,4'-dihydroxydiphenyl sulfone and bis (4-hydroxyphenyl) ketone. These dihydroxyaryl compounds may be used alone or in combination of two or more.

The dihydroxyaryl compound is preferably a bisphenol, bis(hydroxyphenyl)alkane such as 2,2'-bis(4-hydroxyphenyl)propane, bis(hydroxyphenyl)cycloalkane such as bis(4-hydroxyphenyl)cyclohexane, dihydroxydiphenyl sulfide, dihydroxydiphenyl sulfone or dihydroxydiphenyl ketone all of which form an aromatic polycarbonate having high heat resistance. The dihydroxyaryl compound is particularly preferably 2,2'-bis(4-hydroxyphenyl)propane which forms a bisphenol A type aromatic polycarbonate.

Part of bisphenol A may be substituted by another dihydroxyaryl compound to produce a bisphenol A type aromatic polycarbonate as long as heat resistance and mechanical strength are not impaired.

Although the molecular weight of the polycarbonate resin does not need to be particularly limited, when it is too low, strength becomes unsatisfactory and when it is too high, melt viscosity becomes high, thereby making it difficult to mold the resin. The molecular weight of the polycarbonate resin is preferably 10,000 to 50,000, more preferably 15,000 to 30,000 in terms of viscosity average molecular weight. The viscosity average molecular weight (M) is obtained by inserting a specific viscosity ($\eta_{sp}$) obtained from a solution prepared by dissolving 0.7 g of the polycarbonate resin in 100 ml of methylene chloride at 20°C into the following expression.

$$\eta_{sp}/C = [\eta] + 0.45 \times [\eta]^2 C$$

$$[\eta] = 1.23 \times 10^{-4} M^{0.83}$$

($[\eta]$ is an intrinsic viscosity and C is 0.7 as the concentration of the polymer.)

A brief description is given of the basic means of producing the polycarbonate resin. In the interfacial polymerization process (solution polymerization process) in which phosgene is used as a carbonate precursor, a reaction is generally carried out in the presence of an acid binder and an organic solvent. Examples of the acid binder include alkali metal hydroxides such as sodium hydroxide and potassium hydroxide, and amine compounds such as pyridine. Examples of the organic solvent include halogenated hydrocarbons such as methylene chloride and chlorobenzene. A catalyst such as a tertiary amine or quaternary ammonium salt may be used to promote the reaction, and a terminal capping

agent such as phenol or alkyl-substituted phenol as exemplified by p-tert-butylphenol is desirably used as a molecular weight control agent. The reaction temperature is generally 0 to 40°C, the reaction time is several minutes to 5 hours, and pH during the reaction is preferably kept at 10 or more. All the terminals of the obtained molecular chain do not need to have a structure derived from the terminal capping agent.

In the transesterification reaction (melt polymerization process) in which a diester carbonate is used as the carbonate precursor, a predetermined amount of a dihydric phenol is stirred together with the diester carbonate in the presence of an inert gas under heating, and the formed alcohol or phenol is distilled off. The reaction temperature which differs according to the boiling point of the formed alcohol or phenol is generally 120 to 350°C. The reaction is completed while the formed alcohol or phenol is distilled off by reducing the pressure from the initial stage. In the initial stage of the reaction, a terminal capping agent is added at the same time as the dihydric phenol or in the middle of the reaction. An existing known catalyst which is used for a transesterification reaction may be used to promote the reaction. Examples of the diester carbonate used in this transesterification reaction include diphenyl carbonate, dinaphthyl carbonate, dimethyl carbonate, diethyl carbonate and dibutyl carbonate. Out of these, diphenyl carbonate is particularly preferred.

(component A-2: polyamide resin (PA))

The polyamide resin (PA) is, for example, a ring-opened polymer of a cyclic lactam, a polymer of an aminocarboxylic acid or a polycondensate of a dibasic acid and a diamine. Specific examples thereof include aliphatic polyamides such as nylon 6, nylon 66, nylon 46, nylon 610, nylon 612, nylon 11 and nylon 12, aliphatic-aromatic polyamides such as poly(metaxyleneadipamide), poly(hexamethyleneterephthalamide), poly(nonamethyleneterephthalamide), poly(hexamethyleneisophthalamide) and poly(tetramethyleneisophthalamide), and copolymers and mixtures thereof. The polyamide which can be used in the present invention is not particularly limited.

The molecular weight of the polyamide resin is not particularly limited but its relative viscosity measured in 98 % sulfuric acid at a concentration of 1 % and 25°C should be 1.7 to 4.5, preferably 2.0 to 4.0, particularly preferably 2.0 to 3.5.

(component A-2: polyolefin resin)

The polyolefin resin is, for example, a homopolymer or copolymer of an olefin such as ethylene, propylene or butene, or a copolymer of an olefin and a comonomer copolymerizable with the olefin. Specific examples thereof include polyethylene, polypropylene, ethylene-vinyl acetate copolymer, ethylene-ethyl acrylate copolymer, ethylene-acrylic acid copolymer, ethylene-methyl methacrylate copolymer, ethylene-α-olefin copolymer, ethylene-propylene copolymer and ethylene-butene copolymer. Although the molecular weights of these polyolefin resins are not particularly limited, as the molecular weight becomes higher, flame retardancy becomes better.

(component A-2: styrene-based resin)

The styrene-based resin is a homopolymer or copolymer of an aromatic vinyl monomer such as styrene, α-methylstyrene or vinyl toluene, copolymer of one of these monomers and a vinyl monomer such as acrylonitrile or methyl methacrylate, or a graft polymer obtained by graft polymerizing a diene-based rubber such as polybutadiene, ethylene·propylene-based rubber or acrylic rubber with styrene and/or styrene derivative, or styrene and/or styrene derivative with another vinyl monomer. Specific examples of the styrene-based resin include polystyrene, high-impact polystyrene (HIPS), acrylonitrile·styrene copolymer (AS resin), acrylonitrile·butadiene·styrene copolymer (ABS resin), methyl methacrylate·butadiene·styrene copolymer (MBS resin), methyl methacrylate·acrylonitrile·butadiene· styrene copolymer (MABS resin), acrylonitrile·acrylic rubber·styrene copolymer (AAS resin), acrylonitrile· ethylene propylene-based rubber·styrene copolymer (AES resin), and mixtures thereof.

From the viewpoint of impact resistance, rubber modified styrene-based resins are preferred, and they are polymers containing rubber-like polymer particles dispersed in a vinyl aromatic polymer matrix, which are obtained by adding an aromatic vinyl monomer and optionally a vinyl monomer in the presence of a rubber-like polymer and carrying out the known bulk polymerization, bulk suspension polymerization, solution polymerization or emulsion polymerization of the resulting monomer mixture.

Examples of the rubber-like polymer include diene-based rubbers such as polybutadiene, poly(styrene-butadiene) and poly(acrylonitrile-butadiene), saturated rubbers obtained by hydrogenating the above diene rubbers, acrylic rubbers such as isoprene rubber, chloroprene rubber and butyl polyacrylate, and ethylene-propylene-diene monomer terpolymers (EPDM). Out of these, diene-based rubbers are preferred.

The aromatic vinyl monomer which is an essential component contained in the graft copolymerizable monomer mixture to be polymerized in the presence of the above rubber-like polymer is, for example, styrene, (α-methylstyrene or paramethyl styrene, out of which styrene is most preferred.

Examples of the vinyl monomer which can be optionally added include acrylonitrile and methyl methacrylate.

The content of the rubber-like polymer in the rubber modified styrene resin is 1 to 80 wt%, preferably 2 to 70 wt%. The content of the graft polymerizable monomer mixture is 99 to 20 wt%, preferably 98 to 30 wt%.

The MVR value measured under a load of 5 kg at 200°C in accordance with JIS-K-7210-1999 of the styrene-based resin, particularly high-impact polystyrene, is preferably 1 to 100 $cm^3$/10 min, more preferably 2 to 80 $cm^3$/10 min, much more preferably 3 to 60 $cm^3$/10 min, particularly preferably 5 to 50 $cm^3$/10 min.

The MVR value measured under a load of 10 kg at 220°C in accordance with JIS-K-7210-1999 of the styrene-based resin, particularly AS resin and ABS resin, is preferably 1 to 100 $cm^2$/10 min, more preferably 2 to 80 $cm^3$/10 min, much more preferably 3 to 60 $cm^3$/10 min, particularly preferably 5 to 50 $cm^3$/10 min. When the MVR value of the styrene-based resin is smaller than 1 $cm^3$/10 min, the processability at the time of extrusion or molding of the resin composition degrades and when the MVR value is larger than 100 $cm^3$/10 min, the heat resistance and mechanical properties of the resin composition deteriorate.

The styrene-based resin has a reduced viscosity $\eta_{sp}$/C which is a measure of molecular weight of preferably 0.2 to 1.5 dl/g, more preferably 0.3 to 1.4 dl/g. The reduced viscosity $\eta_{sp}$/C is a value obtained by measuring a toluene solution having a concentration of 0.5 g/100 ml at 30°C.

When the reduced viscosity $\eta_{sp}$/C of the styrene-based resin is lower than 0.2 dl/g, the heat resistance and mechanical properties of the obtained resin composition degrade. When the reduced viscosity is higher than 1.5 dl/g, the processability at the time of extrusion or molding of the resin composition degrades.

To satisfy the above requirements for the MVR value and the reduced viscosity $\eta_{sp}$/C of the styrene-based resin, the amount of a polymerization initiator, the polymerization temperature and the amount of a chain transfer agent are controlled.

(component A-2: polyphenylene sulfide resin (PPS))

The polyphenylene sulfide resin (PPS) has a recurring unit represented by the following formula.

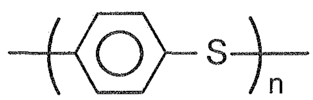

In the above formula, "n" is an integer of 1 or more, preferably 50 to 500, more preferably 100 to 400, and the polyphenylene sulfide resin may be either linear or crosslinked.

As an example of the method of producing the polyphenylene sulfide resin, dichlorobenzene and sodium disulfide are reacted with each other. A crosslinked polyphenylene sulfide resin can be produced by polymerizing a polymer having a low degree of polymerization, heating it in the presence of air and partially crosslinking it to increase its molecular weight, and a linear polyphenylene sulfide resin can be produced by increasing the molecular weight at the time of polymerization.

The polyether imide resin (PEI) as the component A-2 has a recurring unit represented by the following formula.

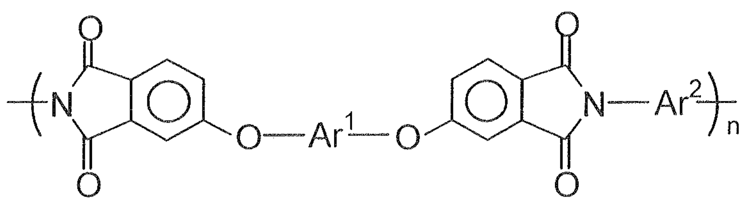

In the above formula, $Ar^1$ is an aromatic dihydroxy compound residue, and $Ar^2$ is an aromatic diamine residue. Examples of the aromatic dihydroxy compound are aromatic dihydroxy compounds which have been enumerated for the above polycarbonate resin. Bisphenol A is particularly preferred. Examples of the aromatic diamine include m-phenylenediamine, p-phenylenediamine, 4,4'-diaminodiphenyl, 3,4'-diaminodiphenyl, 4,4'-diaminodiphenyl ether, 3,4'-diaminodiphenyl ether, diaminodiphenyl methane, diaminodiphenyl sulfone and diaminodiphenyl sulfide.

"n" in the above formula is an integer of 5 to 1,000, preferably 10 to 500.

Examples of the method of producing the polyether imide resin are described in US Patent No. 3,847,867, US Patent No. 3,847,869, US Patent No. 3,850,885, US Patent No. 3,852,242 and US Patent No. 3,855,178.

Out of the above-described components A-2, the polyester resin (PEst) except for the component A-1, polyphenylene ether resin (PPE), polycarbonate resin (PC), polyamide resin (PA), polyolefin resin (PO) and styrene-based resin

are preferred.

(organic phosphorus compound: component B)

In the present invention, the organic phosphorus compound used as the component B is represented by the following formula (1).

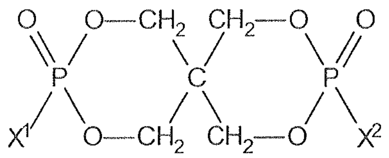

(1)

(In the above formula (1), $X^1$ and $X^2$ are the same or different and each an aromatic substituted alkyl group represented by the following formula (2).)

$$-(AL)-(Ar)_n \qquad (2)$$

In the above formula (2), AL is a branched or linear aliphatic hydrocarbon group having 1 to 5 carbon atoms. Examples of the aliphatic hydrocarbon group include alkylene groups, alkanetriyl groups and alkanetetrayl groups. The alkylene groups include methylene group, ethylene group, propylene group, butylene group, t-butylene group and pentylene group. The alkanetriyl groups include ethanetriyl group, propanetriyl group, butanetriyl group and pentanetriyl group. The alkanetetrayl groups include propanetetrayl group, butanetetrayl group and pentanetetrayl group.

Ar is a phenyl group, naphthyl group or anthryl group all of which may have a substituent. Examples of the substituent include branched or linear alkyl groups having 1 to 5 carbon atoms such as methyl group, ethyl group, propyl group and t-butyl group, and halogen atoms such as fluorine atom and chlorine atom.

"n" is an integer of 1 to 3, and Ar may be bonded to any carbon atom contained in AL.

The organic phosphorus compound is preferably at least one selected from the group consisting of organic phosphorus compounds represented by the following formulas (3) and (4).

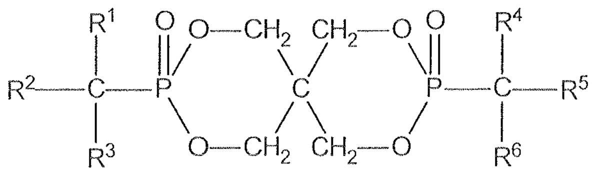

(3)

In the above formula (3), $R^2$ and $R^5$ may be the same or different and are each a phenyl group, naphthyl group or anthryl group all of which may have a substituent. Examples of the substituent include branched or linear alkyl groups having 1 to 5 carbon atoms such as methyl group, ethyl group, propyl group, butyl group and t-butyl group, and halogen atoms such as fluorine atom and chlorine atom.

$R^1$, $R^3$, $R^4$ and $R^6$ may be the same or different and are each a hydrogen atom, branched or linear alkyl group having 1 to 4 carbon atoms, or aromatic group selected from phenyl group, naphthyl group and anthryl group all of which may have a substituent. Examples of the alkyl group include methyl group, ethyl group, propyl group, butyl group, t-butyl group and pentyl group. Examples of the substituent for the aromatic group include branched or linear alkyl groups having 1 to 5 carbon atoms such as methyl group, ethyl group, propyl group and t-butyl group, and halogen atoms such as fluorine atom and chlorine atom.

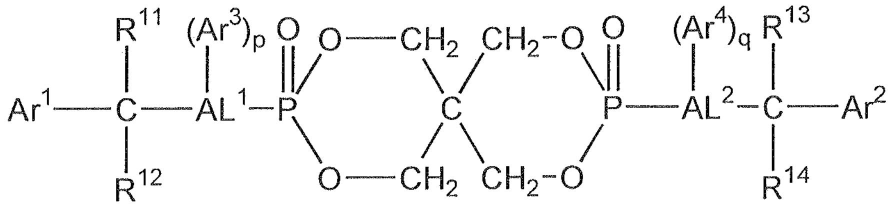

(4)

In the above formula (4), $Ar^1$ and $Ar^2$ may be the same or different and are each a phenyl group, naphthyl group or anthryl group all of which may have a substituent in the aromatic ring. Examples of the substituent in the aromatic ring include branched or linear alkyl groups having 1 to 5 carbon atoms such as methyl group, ethyl group, propyl group and t-butyl group, and halogen atoms such as fluorine atom and chlorine atom.

$R^{11}$, $R^{12}$, $R^{13}$ and $R^{14}$ may be the same or different and are each a hydrogen atom, aliphatic hydrocarbon group having 1 to 3 carbon atoms, or phenyl group, naphthyl group or anthryl group all of which may have a substituent in the aromatic ring. Examples of the aliphatic hydrocarbon group include methyl group, ethyl group, propyl group, butyl group, t-butyl group and pentyl group. Examples of the substituent in the aromatic ring include branched or linear alkyl groups having 1 to 5 carbon atoms such as methyl group, ethyl group, propyl group and t-butyl group, and halogen atoms such as fluorine atom and chlorine atom.

$AL^1$ and $AL^2$ may be the same or different and are each a branched or linear aliphatic hydrocarbon group having 1 to 4 carbon atoms. Examples of the aliphatic hydrocarbon group include alkylene groups, alkanetriyl groups and alkanetetrayl groups. The alkylene groups include methylene group, ethylene group, propylene group, butylene group, t-butylene group and pentylene group. The alkanetriyl groups include ethanetriyl group, propanetriyl group, butanetriyl group and pentanetriyl group. The alkanetetrayl groups include propanetetrayl group, butanetetrayl group and pentanetetrayl group.

$Ar^3$ and $Ar^4$ may be the same or different and are each a phenyl group, naphthyl group or anthryl group all of which may have a substituent in the aromatic ring. Examples of the substituent in the aromatic ring include branched or linear alkyl groups having 1 to 5 carbon atoms such as methyl group, ethyl group, propyl group and t-butyl group, and halogen atoms such as fluorine atom and chlorine atom.

"p" and "q" are each an integer of 0 to 3, and $Ar^3$ and $Ar^4$ may be bonded to any carbon atom in $AL^1$ and $AL^2$, respectively.

The organic phosphorus compound is more preferably an organic phosphorus compound represented by the following formula (5), (6), (7) or (8).

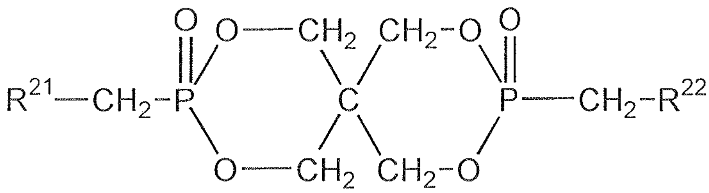

(5)

In the above formula (5), $R^{21}$ and $R^{22}$ are the same or different and each a phenyl group, naphthyl group or anthryl group all of which may have a substituent in the aromatic ring. Out of these, they are preferably phenyl groups. Examples of the substituent in the aromatic ring include methyl group, ethyl group, propyl group, butyl group and aryl group having 6 to 14 carbon atoms and the bond of the aromatic ring through an oxygen atom, sulfur atom or aliphatic hydrocarbon group having 1 to 4 carbon atoms.

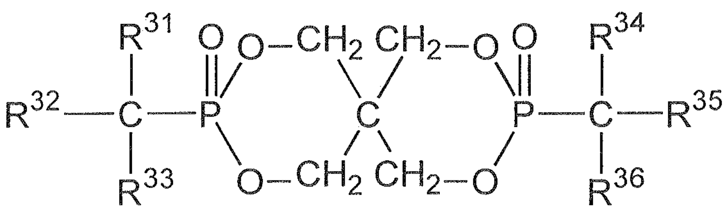

(6)

In the formula (6), $R^{31}$ and $R^{34}$ may be the same or different and are each a hydrogen atom or aliphatic hydrocarbon group having 1 to 4 carbon atoms. $R^{31}$ and $R^{34}$ are each preferably a hydrogen atom, methyl group or ethyl group, particularly preferably a hydrogen atom.

$R^{33}$ and $R^{36}$ may be the same or different and are each an aliphatic hydrocarbon group having 1 to 4 carbon atoms, preferably methyl group or ethyl group.

$R^{32}$ and $R^{35}$ may be the same or different and are each a phenyl group, naphthyl group or anthryl group all of which may have a substituent in the aromatic ring. They are preferably phenyl groups. The aromatic ring may have a substituent in any part except for the part bonded to phosphorus through a carbon atom. Examples of the substituent include methyl group, ethyl group, propyl group (including an isomer thereof), butyl group (including an isomer thereof) and aryl group having 6 to 14 carbon atoms and the bond of the aromatic ring through oxygen, sulfur or aliphatic hydrocarbon group having 1 to 4 carbon atoms.

In the formula (6), preferred examples of $R^{32}$ and $R^{35}$ include phenyl group, cresyl group, xylyl group, trimethylphenyl group, 4-phenoxyphenyl group, cumyl group, naphthyl group and 4-benzylphenyl group. They are particularly preferably phenyl groups.

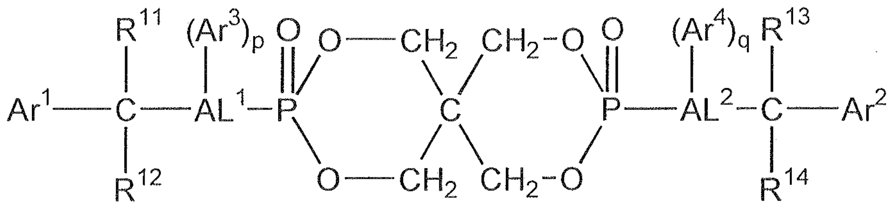

(7)

In the above formula (7), $Ar^1$ and $Ar^2$ may be the same or different and are each a phenyl group, naphthyl group or anthryl group all of which may have a substituent in the aromatic ring. Preferred examples of $Ar^1$ and $Ar^2$ include phenyl group, cresyl group, xylyl group, trimethylphenyl group, 4-phenoxyphenyl group, cumyl group, naphthyl group and 4-benzylphenyl group. They are particularly preferably phenyl groups. Examples of the substituent in the aromatic ring include branched or linear alkyl groups having 1 to 5 carbon atoms such as methyl group, ethyl group, propyl group and t-butyl group, and halogen atoms such as fluorine atom and chlorine atom.

$R^{11}$, $R^{12}$, $R^{13}$ and $R^{14}$ may be the same or different and are each a hydrogen atom, aliphatic hydrocarbon group having 1 to 3 carbon atoms, or phenyl group, naphthyl group or anthryl group all of which may have a substituent in the aromatic ring. They are preferably phenyl groups. The aromatic ring may have a substituent in any part except for the part bonded to phosphorus through a carbon atom. Examples of the substituent include methyl group, ethyl group, propyl group (including an isomer thereof), butyl group (including an isomer thereof) and aryl group having 6 to 14 carbon atoms and the bond of the aromatic ring through oxygen, sulfur or aliphatic hydrocarbon group having 1 to 4 carbon atoms.

In the formula (7), $AL^1$ and $AL^2$ may be the same or different and are each a branched or linear aliphatic hydrocarbon group having 1 to 4 carbon atoms. They are each preferably a branched or linear aliphatic hydrocarbon group having 1 to 3 carbon atoms, particularly preferably a branched or linear aliphatic hydrocarbon group having 1 to 2 carbon atoms.

In the above formula (7), preferred examples of $AL^1$ and $AL^2$ include methylene group, ethylene group, ethylidene group, trimethylene group, propylidene group and isopropylidene group. Out of these, methylene group, ethylene group and ethylidene group are particularly preferred.

In the formula (7), $Ar^3$ and $Ar^4$ may be the same or different and are each a phenyl group, naphthyl group or anthryl group all of which may have a substituent in the aromatic ring. $Ar^3$ and $Ar^4$ are preferably phenyl groups. The aromatic ring may have a substituent in any part except for the part bonded to phosphorus through a carbon atom. Examples of the substituent include methyl group, ethyl group, propyl group (including an isomer thereof), butyl group (including an isomer thereof) and aryl group having 6 to 14 carbon atoms and the bond of the aromatic ring through oxygen, sulfur or aliphatic hydrocarbon group having 1 to 4 carbon atoms.

In the formula (7), "p" and "q" are each an integer of 0 to 3, and $Ar^3$ and $Ar^4$ may be bonded to any carbon atom in $AL^1$ and $AL^2$, respectively. "p" and "q" are preferably 0 or 1, particularly preferably 0.

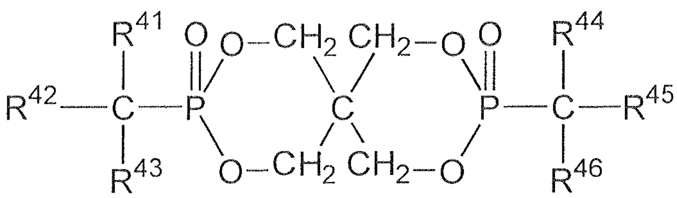

(8)

In the above formula (8), $R^{41}$ and $R^{44}$ may be the same or different and are each a hydrogen atom, aliphatic hydrocarbon group having 1 to 4 carbon atoms, or phenyl group, naphthyl group or anthryl group all of which may have

a substituent in the aromatic ring. $R^{41}$ and $R^{44}$ are each preferably a hydrogen atom, aliphatic hydrocarbon group having 1 to 3 carbon atoms, or phenyl group which may have a substituent. When $R^{41}$ and $R^{44}$ are phenyl groups, they may have a substituent in any part except for the part bonded to phosphorus through a carbon atom on the aromatic ring. Examples of the substituent include methyl group, ethyl group, propyl group (including an isomer thereof), butyl group (including an isomer thereof) and aryl group having 6 to 14 carbon atoms and the bond of the aromatic ring through oxygen, sulfur or aliphatic hydrocarbon group having 1 to 4 carbon atoms.

In the formula (8), preferred examples of $R^{41}$ and $R^{44}$ include hydrogen atom, methyl group, ethyl group, propyl group (including an isomer thereof), phenyl group, cresyl group, xylyl group, trimethylphenyl group, 4-phenoxyphenyl group, cumyl group, naphthyl group and 4-benzylphenyl group. Out of these, hydrogen atom, methyl group and phenyl group are particularly preferred.

$R^{42}$, $R^{43}$, $R^{45}$ and $R^{46}$ may be the same or different and are each a phenyl group, naphthyl group or anthryl group all of which may have a substituent in the aromatic ring. They are preferably phenyl groups and may have a substituent in any part except for the part bonded to phosphorus through a carbon atom on the aromatic ring. Examples of the substituent include methyl group, ethyl group, propyl group (including an isomer thereof), butyl group (including an isomer thereof) and aryl group having 6 to 14 carbon atoms and the bond of the aromatic ring through oxygen, sulfur or aliphatic hydrocarbon group having 1 to 4 carbon atoms.

In the formula (8), preferred examples of $R^{42}$, $R^{43}$, $R^{45}$ and $R^{46}$ include phenyl group, cresyl group, xylyl group, trimethylphenyl group, 4-phenoxyphenyl group, cumyl group, naphthyl group and 4-benzylphenyl group. They are particularly preferably phenyl groups.

The organic phosphorus compound (component B) represented by the formula (1) has an extremely excellent flame retarding effect for the above resin. As far as the inventor of the present invention know, the halogen-free flame retardation of the resin has been difficult with a small amount of a flame retardant and has had a large number of problems to be solved for practical use.

However, according to the present invention, surprisingly, the flame retardation of the resin is easily attained by using a small amount of the above organic phosphorus compound (component B) alone without impairing the characteristic properties, especially heat resistance of the resin.

In the present invention, a flame retardant except for the component B, a flame retarding aid, a fluorine-containing resin or another additive may be used naturally in addition to the component B so as to reduce the amount of the component B and improve the flame retardancy, physical properties and chemical properties of a molded article and for other purposes.

Although the organic phosphorus compound (component B) is represented by the above formula (1), the most preferred typical compound is represented by the following formula (1-a), (1-b), (1-c) or (1-d).

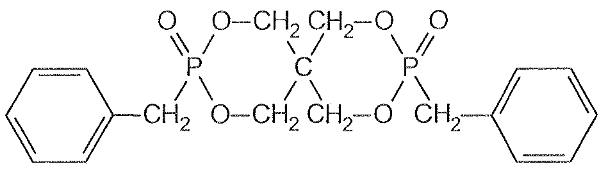

(1-a)

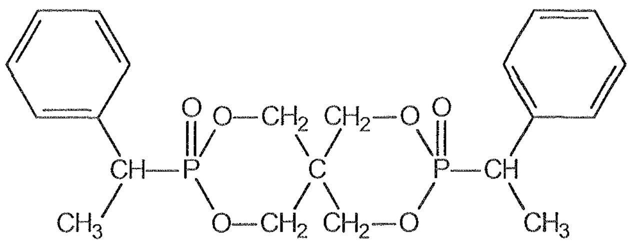

(1-b)

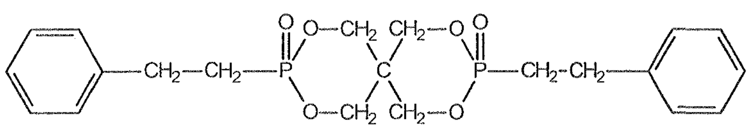

(1-c)

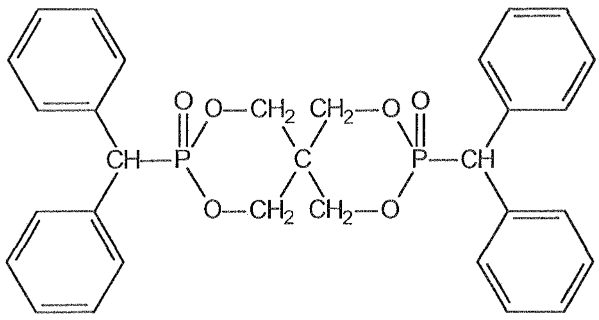

(1-d)

A description is subsequently given of the method of synthesizing the organic phosphorus compound (component B). The component B may be produced by a method other than the method which will be described below.
The component B is obtained by reacting pentaerythritol with phosphorus trichloride, treating the oxidized reaction product with an alkali metal compound such as sodium methoxide and reacting the treated product with aralkyl halide.
The component B may also be obtained by a method in which pentaerythritol is reacted with aralkyl phosphonic acid dichloride, or a method in which pentaerythritol is reacted with phosphorus trichloride and then the obtained compound is reacted with an aralkyl alcohol to carry out Arbuzov rearrangement at a high temperature. The latter reaction is disclosed in US Patent No. 3,141,032, JP-A 54-157156 and JP-A 53-39698.
A specific method of synthesizing the component B will be described hereinbelow, and this method is just for explanation. The component B used in the present invention may be synthesized not only by this method but also by its modified method or another method. A more specific synthesizing method will be described in Preparation Examples which are given hereinafter.

(I) organic phosphorus compound (1-a) out of components B;

This compound can be obtained by reacting pentaerythritol with phosphorus trichloride, treating the reaction product oxidized by tertiary butanol with sodium methoxide, and reacting the treated product with benzyl bromide.

(II) organic phosphorus compound (1-b) out of components B;

This compound can be obtained by reacting pentaerythritol with phosphorus trichloride, treating the reaction product oxidized by tertiary butanol with sodium methoxide, and reacting the treated product with 1-phenylethyl bromide.

(III) organic phosphorus compound (1-c) out of components B;

This compound can be obtained by reacting pentaerythritol with phosphorus trichloride, treating the reaction product oxidized by tertiary butanol with sodium methoxide, and reacting the treated product with 2-phenylethyl bromide.

(IV) organic phosphorus compound (1-d) out of components B;

This compound can be obtained by reacting pentaerythritol with diphenylmethyl phosphonic acid dichloride.
As an alternative method, the organic phosphorus compound is obtained by reacting pentaerythritol with phosphorus trichloride and heating a reaction product of the obtained product and diphenyl methyl alcohol in the presence of a catalyst.
The acid value of the organic phosphorus compound (component B) is preferably not more than 0.7 mgKOH/g, more preferably not more than 0.5 mgKOH/g. By using the component B having an acid value within this range, a molded article which is excellent in flame retardancy and color and has high heat stability is obtained. The acid value of the component B is most preferably not more than 0.4 mgKOH/g. The term "acid value" means the amount (mg) of KOH required for the neutralization of the acid component contained in 1 g of a sample (component B).
Further, the component B having an HPLC purity of preferably at least 90 %, more preferably at least 95 % is used. The component B having such high HPLC purity is excellent in the flame retardancy, color and heat stability of a molded article obtained therefrom. The HPLC purity of the component B can be effectively measured by the following method.
The Develosil ODS-7 having a length of 300 mm and a diameter of 4 mm of Nomura Chemical Co., Ltd. was used as a column, and the column temperature was set to 40°C. A mixed solution of acetonitrile and water in a volume

ratio of 6:4 was used as a solvent, and 5 μl of the solution was injected. UV-260 nm was used as a detector.

The method of removing impurities contained in the component B is not particularly limited but a method in which repulp washing (washing with a solvent and filtration are repeated several times) with a solvent such as water or methanol is carried out is the most effective and economically advantageous.

The content of the component B is 1 to 100 parts by weight, preferably 5 to 90 parts by weight, more preferably 10 to 70 parts, particularly preferably 15 to 50 parts by weight by weight based on 100 parts by weight of the resin component (component A). The preferred range of the content of the component B is determined according to the desired level of flame retardancy and the type and amount of the resin component (component A). Other components except for the components A, B, C and D constituting the composition may be optionally used as long as the object of the present invention is not impaired. Use of another flame retardant, a retarding aid or a fluorine-containing resin can also change the content of the component B. In most cases, the content of the component B can be reduced by using these substances.

(filler: component C)

The filler (component C) should be used to improve the physical properties, especial mechanical properties of a molded article and may be either inorganic or organic. A fibrous filler is preferred.

Examples of the inorganic filler include glass-based fillers such as glass chopped fibers, glass milled fibers, glass robing strands, glass flakes, glass beads and glass powders; carbon-based fillers such as carbon fibers, carbon milled fibers, carbon robing strands and carbon flakes; inorganic fillers such as talc, mica, wollastonite, kaolin, montmorillonite, bentonite, sepiolite, xonotlite, clay and silica; inorganic pigments such as titanium oxide, and carbon black. The inorganic filler is selected from among these or a combination thereof. A fibrous filler is preferably used to reinforce the resin composition. Glass fibers, carbon fibers or mixtures thereof are preferably used.

Examples of the organic filler include chip fillers such as rice husk chips, wooden chips, bean curd refuse, old paper crushed chips and apparel crushed chips, fibrous fillers such as plant fibers including cotton fibers, hemp fibers, bamboo fibers, wooden fibers, kenaf fibers, jute fibers, banana fibers and coconut fibers, pulp and cellulose fibers obtained from these plant fibers, animal fibers including silk, wool, Angora, cashmere and camel fibers, and synthetic fibers including polyester fibers, nylon fibers and acrylic fibers, and powdery fillers such as paper powders, wooden powders, cellulose powders, rice husk powders, fruit shell powders, chitin powders, chitosan powders, protein powders and starch powders. From the viewpoint of moldability, powdery fillers such as paper powders, wooden powders, bamboo powders, cellulose powders, kenaf powders, rice husk powders, fruit shell powders, chitin powders, chitosan powders, protein powders and starch powders are preferred. Paper powders, wooden powders, bamboo powders, cellulose powders and kenaf powders are more preferred. Paper powders and wooden powders are much more preferred. Paper powders are particularly preferred.

Organic fillers directly obtained from natural products may be used, and organic fillers recycled from waste materials such as used paper, waste timber and used clothing may also be used. Conifers such as yellow pine, cedar, cypress and fir, and broadleaf trees such as beech, chinquapin and eucalyptus are preferred as timber.

Preferred examples of the paper powders include paper powders containing an adhesive, especially an emulsion-based adhesive such as vinyl acetate resin-based emulsion or acrylic resin-based emulsion which is generally used to process paper, or a hot melt adhesive such as polyvinyl alcohol-based adhesive or polyamide-based adhesive from the viewpoint of moldability.

A sizing agent or a surface treating agent may be used for the filler (component C) as required. Although the type of the sizing agent or the surface treating agent is not particularly limited, in general, functional compounds such as epoxy-based compounds, silane-based compounds and titanate-based compounds may be used, and a functional compound suitable for the resin is preferably selected. Epoxy-based compounds are preferred, and bisphenol A type and/or novolak type epoxy resins are more preferred.

The content of the filler (component C) is 1 to 200 parts by weight, preferably 5 to 150 parts by weight, more preferably 10 to 100 parts by weight based on 100 parts by weight of the resin component (component A). When the content is higher than 200 parts by weight, the flame retardancy and physical properties of the resin composition deteriorate, handling ease and moldability may degrade, and also the surface appearance may become bad.

(impact resistance modifier: component D)

An example of the impact resistance modifier (component D) is (i) an impact resistance modifier which contains therein at least one rubber layer made of at least one selected from an acrylic component, silicon-based component, styrene-based component, nitrile-based component, conjugated diene-based component, urethane-based component and ethylene propylene-based component and also a vinyl monomer as a component other than rubber layer. Another example is (ii) an impact resistance modifier which comprises substantially no rubber component, such as copolyethylene,

a polyester elastomer or a polyamide elastomer.

The component D is preferably (i) an impact resistance modifier which contains at least one rubber layer therein, particularly preferably a hydrogenated styrene-based thermoplastic elastomer.

The hydrogenated styrene-based thermoplastic elastomer is obtained by hydrogenating a copolymer of an aromatic vinyl monomer and a conjugated diene monomer. The hydrogenated styrene-based thermoplastic elastomer is a terpolymer obtained by hydrogenating a polymer containing a conjugated diene in the recurring unit. Examples of the polymer containing a conjugated diene in the recurring unit which is advantageously used include a styrene-butadiene copolymer, styrene-isoprene copolymer and styrene-isopentadiene copolymer. The hydrogenation method is not particularly limited and can be carried out based on the prior art disclosed, for example, by JP-A 2007-301449.

Examples of the hydrogenated styrene-based thermoplastic elastomer include a styrene-ethylene-butylene-styrene terpolymer (SEBS) obtained by hydrogenating a styrene-butadiene copolymer, styrene-ethylene-propylene-styrene terpolymer (SEPS) obtained by hydrogenating a styrene-isoprene copolymer, and styrene-ethylene-propylene-styrene terpolymer (SEEPS) obtained by hydrogenating a styrene-isopentadiene copolymer.

Preferably, at least 50 wt% of the impact resistance modifier (component D) consists of at least one hydrogenated styrene-based thermoplastic elastomer selected from styrene-ethylene-butylene-styrene terpolymer (SEBS), styrene-ethylene-propylene-styrene terpolymer (SEPS) and styrene-ethylene-propylene-styrene terpolymer (SEEPS).

The content of the impact resistance modifier (component D) is 1 to 100 parts by weight, preferably 2 to 80 parts by weight, more preferably 3 to 50 parts by weight based on 100 parts by weight of the resin component (component A). When the content is higher than 100 parts by weight, the heat resistance, releasability and dimensional stability of the resin composition deteriorate and when the content is lower than 1 part by weight, sufficiently high impact resistance is not obtained.

Preferably, at least 50 wt% of the impact resistance modifier (component D) consists of the hydrogenated styrene-based thermoplastic elastomer.

(flame retardant, flame retarding aid)

Another flame retardant or flame retarding aid which can be added to the resin composition of the present invention is not particularly limited but preferably a halogen-free compound from the viewpoint of the nature of the present invention. Preferred examples of the compound include red phosphorus, triaryl phosphates represented by the following formula (E-1), condensation phosphates represented by the following formula (E-2), condensation phosphates represented by the following formula (E-3), organic phosphorus compounds represented by the following formula (E-4), ammonium polyphosphate, melamine polyphosphate, phosphazene compounds, metal phosphinates and melamine cyanurate.

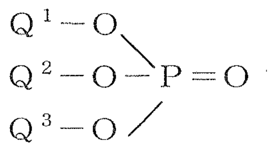

··· (E−1)

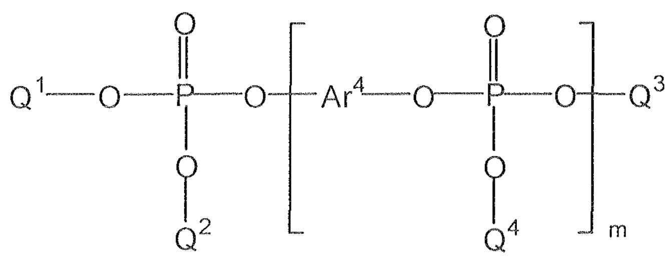

··· (E−2)

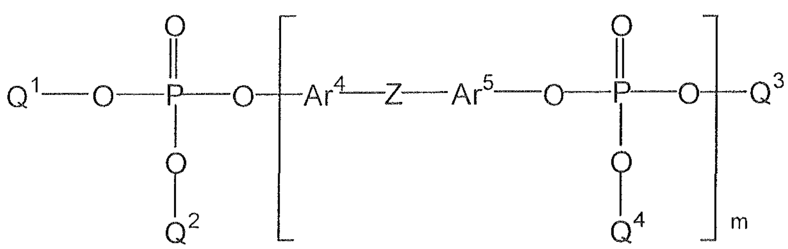

··· (E−3)

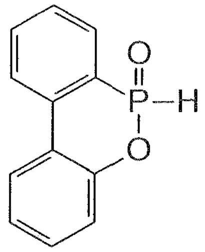

$\cdots$ (E − 4)

In the above formulas (E-1) to (E-3), $Q^1$ to $Q^4$ may be the same or different and are each an aryl group having 6 to 15 carbon atoms, preferably 6 to 10 carbon atoms. Examples of the aryl group include phenyl group, naphthyl group and anthryl group. These aryl groups may have 1 to 5, preferably 1 to 3 substituents. Examples of the substituents include (i) alkyl groups having 1 to 12 carbon atoms, preferably 1 to 9 carbon atoms such as methyl group, ethyl group, propyl group, isopropyl group, n-butyl group, sec-butyl group, tert-butyl group, neopentyl group and nonyl group, (ii) alkyloxy groups having 1 to 12 carbon atoms, preferably 1 to 9 carbon atoms such as methoxy group, ethoxy group, propoxy group, butoxy group and pentoxy group, (iii) alkylthio groups having 1 to 12 carbon atoms, preferably 1 to 9 carbon atoms such as methylthio group, ethylthio group, propylthio group, butylthio group and pentylthio group, and (iv) groups represented by $Ar^6$-$W^1$ ($W^1$ is -O-, -S- or alkylene group having 1 to 8 carbon atoms, preferably 1 to 4 carbon atoms, and $Ar^6$ is an aryl group having 6 to 15 carbon atoms, preferably 6 to 10 carbon atoms).

In the formulas (E-2) to (E-3), $Ar^4$ and $Ar^5$ may be the same or different when both are existent (in the case of E-3) and are each an arylene group having 6 to 15 carbon atoms, preferably 6 to 10 carbon atoms. Examples thereof include phenylene group and naphthylene group. This arylene group may have 1 to 4, preferably 1 to 2 substituents. Examples of the substituents include (i) alkyl groups having 1 to 4 carbon atoms such as methyl group, ethyl group, propyl group, isopropyl group, n-butyl group, sec-butyl group and tert-butyl group, (ii) aralkyl groups having 7 to 20 carbon atoms such as benzyl group, phenethyl group, phenylpropyl group, naphthylmethyl group and cumyl group, (iii) groups represented by $Q^5$-$W^2$ ($W^2$ is -O- or -S-, and $Q^5$ is an alkyl group having 1 to 4 carbon atoms, preferably 1 to 3 carbon atoms, or aryl group having 6 to 15 carbon atoms, preferably 6 to 10 carbon atoms), and (iv) aryl groups having 6 to 15 carbon atoms such as phenyl group.

In the formulas (E-2) and (E-3), "m" is an integer of 1 to 5, preferably 1 to 3, particularly preferably 1.

In the formula (E-3), Z is a single bond or group for bonding $Ar^4$ and $Ar^5$, and -$Ar^4$-Z-$Ar^5$ is generally a residue derived from bisphenol. Thus, Z is a single bond, -O-, -CO-, -S-, -$SO_2$- or alkylene group having 1 to 3 carbon atoms, preferably a single bond, -O- or isopropylidene.

(fluorine-containing resin)

The resin composition of the present invention may comprise a fluorine-containing resin. The fluorine-containing resin is not particularly limited if it has fibril forming ability. Examples of the fluorine-containing resin include homo- and co-polymers of a fluorine-containing monomer such as tetrafluoroethylene, trifluoroethylene, vinyl fluoride, vinylidene fluoride or hexafluoropropylene. Polytetrafluoroethylene having fibril forming ability is particularly preferred. An example of the polytetrafluoroethylene having fibril forming ability is powders obtained by coagulating and drying latex obtained by emulsion polymerizing tetrafluoroethylene (so-called "fine powders of polytetrafluoroethylene" and classified as type 3 according to ASTM standards). An aqueous dispersion produced by adding a surfactant to the latex to concentrate and stabilize it is also used (so-called "dispersion of polytetrafluoroethylene").

The molecular weight of the polytetrafluoroethylene having fibril forming ability is preferably 1,000,000 to 10, 000, 000, more preferably 2, 000, 000 to 9, 000, 000 in terms of number average molecular weight obtained from standard specific gravity.

The primary particle diameter of the polytetrafluoroethylene having fibril forming ability is preferably 0.05 to 1.0 μm, more preferably 0.1 to 0.5 μm. When the fine powders are used, the secondary particle diameter thereof is preferably 1 to 1,000 μm, more preferably 10 to 500 μm.

The polytetrafluoroethylene has melt dripping prevention ability at the time of the burn test of a test sample in a UL vertical burn test. Commercially available products of the polytetrafluoroethylene having fibril forming ability include Teflon 6J and Teflon 30J of Du Pont-Mitsui Fluorochemicals Co., Ltd., Polyfuron MPA500 A-500, Polyfuron F-201L and Polyfuron D-1 of Daikin Industries, Ltd. and CD076 of Asahi ICI Fluoropolymers Co., Ltd.

The polytetrafluoroethylene fine powders which have been subjected to various treatments to prevent their secondary agglomeration are more preferably used. As one of the treatments, the surface of the polytetrafluoroethylene is calcined. As another treatment, the surface of the polytetrafluoroethylene having fibril forming ability is coated with polytetrafluoroethylene having no fibril forming ability. The polytetrafluoroethylene subjected to the latter treatment is

more preferred in the present invention. In the case of the former treatment, fibril forming ability of interest tends to degrade. In this case, the polytetrafluoroethylene having fibril forming ability preferably accounts for 70 to 95 wt% of the total amount. The polytetrafluoroethylene having no fibril forming ability has a number average molecular weight obtained from standard specific gravity of preferably 10,000 to 1,000,000, more preferably 10,000 to 800,000.

The polytetrafluoroethylene (may be abbreviated as PTFE hereinafter) may be in a solid form or an aqueous dispersion form as described above.

The polytetrafluoroethylene in a normally solid form, aqueous emulsion form or dispersion form may be used. Since a dispersant component has an adverse effect on moist heat resistance, polytetrafluoroethylene in a solid form can be particularly preferably used.

To improve dispersibility in a resin and obtain a good appearance and mechanical properties, the polytetrafluoroethylene having fibril forming ability is also preferably an agglomerated mixture of a polytetrafluoroethylene emulsion and a vinyl-based polymer emulsion.

Examples of the vinyl-based polymer include polypropylene, polyethylene, polystyrene, HIPS, AS resin, ABS resin, MBS resin, MABS resin, AAS resin, polymethyl (meth)acrylate, a block copolymer of styrene and butadiene and a hydrogenated copolymer thereof, a block copolymer of styrene and isoprene and a hydrogenated copolymer thereof, an acrylonitrile-butadiene copolymer, random and block copolymers of ethylene and propylene, random and block copolymers of ethylene and butene, copolymer of ethylene and an $\alpha$-olefin, copolymer of ethylene and an unsaturated carboxylate such as ethylene-butyl acrylate, copolymer of an acrylate such as butyl acrylate-butadien, rubber-like polymer such as polyalkyl (meth)acrylate, composite rubber containing polyorganosiloxane and a polyalkyl (meth)acrylate, and copolymer obtained by graft copolymerizing a vinyl-based monomer such as styrene acrylonitrile or polyalkyl methacrylate with the composite rubber.

To prepare the above agglomerated mixture, an aqueous emulsion of the above vinyl-based polymer having an average particle diameter of 0.01 to 1 $\mu$m, particularly 0.05 to 0.5 $\mu$m is mixed with an aqueous emulsion of polytetrafluoroethylene having an average particle diameter of 0.05 to 10 $\mu$m, particularly 0.05 to 1.0 $\mu$m. The polytetrafluoroethylene emulsion is obtained through the emulsion polymerization of polytetrafluoroethylene using a fluorine-containing surfactant. At the time of emulsion polymerization, another comonomer such as hexafluoropropylene can be copolymerized in an amount of not more than 10 wt% based on the whole polytetrafluoroethylene.

To obtain the above agglomerated mixture, a suitable polytetrafluoroethylene emulsion having a solid content of generally 40 to 70 wt%, particularly 50 to 65 wt% and a vinyl-based polymer emulsion having a solid content of 25 to 60 wt%, particularly 30 to 45 wt% are used. Further, the content of the polytetrafluoroethylene in the agglomerated mixture is preferably 1 to 80 wt%, particularly preferably 1 to 60 wt% based on 100 wt% of the total of it and the vinyl-based polymer used in the agglomerated mixture. A production process in which, after the above emulsions are mixed together, the resulting mixture is mixed under agitation and injected into hot water containing a metal salt such as calcium chloride or magnesium sulfate to be salted out and coagulated so as to separate and collect the agglomerated mixture is preferred. Alternatively, a process in which the stirred emulsion mixture is spray dried or freeze dried to be collected may also be used.

The agglomerated mixture of an emulsion of the polytetrafluoroethylene having fibril forming ability and an emulsion of the vinyl-based polymer in various forms may be used. For example, the agglomerated mixture may be such that the vinyl-based polymer covers the surface of each polytetrafluoroethylene particle, the polytetrafluoroethylene covers the surface of the vinyl-based polymer, or several particles agglomerate around one particle.

Further, an agglomerated mixture further having the same or different vinyl-based polymer which is graft polymerized on the outer layer may also be used. Preferred examples of the vinyl-based monomer include styrene, $\alpha$-methylstyrene, methyl methacrylate, cyclohexyl acrylate, dodecyl methacrylate, dodecyl acrylate, acrylonitrile and 2-ethylhexyl acrylate. They may be used alone or copolymerized.

Commercially available products of the agglomerated mixture of an emulsion of the polytetrafluoroethylene having fibril forming ability and an emulsion of the vinyl-based polymer include the METABLEN A3000 of Mitsubishi Rayon Co., Ltd. and the BLENDEX 449 of GE Specialty Chemicals Inc.

(crystallization accelerator)

The resin composition of the present invention may comprise a crystallization accelerator. When the resin composition comprises the crystallization accelerator, a molded article having excellent mechanical properties, heat resistance and moldability can be obtained.

That is, by using the crystallization accelerator, the moldability and crystallinity of the resin component (component A) are improved and the resin component is fully crystallized through ordinary injection molding, thereby making it possible to obtain a molded article having excellent heat resistance and moist heat resistance stability. In addition, the time required for the manufacture of a molded article can be drastically shortened with the result that its economical effect is large.

Both an inorganic crystallization nucleating agent and an organic crystallization nucleating agent may be used as the crystallization accelerator.

Examples of the inorganic crystallization nucleating agent include talc, kaolin, silica, synthetic mica, clay, zeolite, graphite, carbon black, zinc oxide, magnesium oxide, titanium oxide, calcium carbonate, calcium sulfate, barium sulfate, calcium sulfide, boron nitride, montmorillonite, neodymium oxide, aluminum oxide and phenylphosphonate metal salts. These inorganic crystallization nucleating agents are preferably treated with a dispersion aid so as to improve their dispersibility in the composition and their effect so that they are highly dispersed to such an extent that their primary particle diameters become about 0.01 to 0.5 μm.

Examples of the organic crystallization nucleating agent include organic metal carboxylates such as calcium benzoate, sodium benzoate, lithium benzoate, potassium benzoate, magnesium benzoate, barium benzoate, calcium oxalate, disodium terephthalate, dilithium terephthalate, dipotassium terephthalate, sodium laurate, potassium laurate, sodium myristate, potassium myristate, calcium myristate, barium myristate, sodium octanoate, calcium octanoate, sodium stearate, potassium stearate, lithium stearate, calcium stearate, magnesium stearate, barium stearate, sodium montanate, calcium montanate, sodium toluylate, sodium salicylate, potassium salicylate, zinc salicylate, aluminum dibenzoate, sodium β-naphthoate, potassium β-naphthoate and sodium cyclohexanecarboxylate, and organic metal sulfonates such as sodium p-toluenesulfonate and sodium sulfoisophthalate.

Organic carboxylic acid amides such as stearic acid amide, ethylenebis lauric acid amide, palmitic acid amide, hydroxystearic acid amide, erucic acid amide and trimesic acid tris(tert-butylamide), low-density polyethylene, high-density polyethylene, polyisopropylene, polybutene, poly-4-methylpentene, poly-3-methylbutene-1, polyvinyl cycloalkane, polyvinyl trialkylsilane, high-melting point polylactic acid, sodium salts of an ethylene-acrylic acid copolymer, sodium salts of a styrene-maleic anhydride copolymer (so-called "monomer"), benzylidene sorbitol and derivatives thereof such as dibenzylidene sorbitol are also included.

Talc and at least one selected from organic metal carboxylates out of these are preferably used. These crystallization nucleating agents may be used alone or in combination of two or more in the present invention.

The content of the crystallization accelerator is preferably 0.01 to 30 parts by weight, more preferably 0.05 to 20 parts by weight based on 100 parts by weight of the resin component (component A).

<production of resin composition>

The flame retardant resin composition of the present invention can be prepared by pre-mixing together the resin component (component A), the organic phosphorus compound (component B), the filler (component C), the impact resistance modifier (component D) and optionally other components by means of a mixer such as a twin-cylinder mixer, a super mixer, a super floater or a Henschel mixer and supplying the pre-mixture into a kneading machine to melt knead it. Various melt mixers such as a kneader and single-screw and double-screw extruders may be used as the kneading machine. A method in which a double-screw extruder is used to melt the resin composition at 200 to 300°C, preferably 210 to 280°C, a liquid component is injected into the resin composition by a side feeder, and the resulting mixture is extruded and pelletized by a pelletizer is particularly preferably employed.

When a filler having a high aspect ratio (component C) is pre-blended by the melt mixing method, the aspect ratio thereof drops and the mechanical properties of the obtained resin composition may degrade. Therefore, the filler is preferably added by using a side feeder.

<molded article>

The resin composition of the present invention attains at least UL-94 V-2 flammability. The present invention includes a molded article formed from the above resin composition.

Since the resin composition of the present invention contains substantially no halogen and has extremely high flame retardancy, it is useful as a material for forming various molded articles such as home electric appliance parts, electric and electronic parts, auto parts, mechanical and electromechanical parts, and cosmetic containers. More specifically, it can be advantageously used in breaker parts, switch parts, motor parts, ignition coil cases, power plugs, power receptacles, coil bobbins, connectors, relay cases, fuse cases, flyback transformer parts, focus block parts, distributor caps and harness connectors. Further, it is useful for housings, casings and chassis which are becoming thinner, for example, for electric and electronic products (for example, home electric appliances and OA equipment and parts thereof, such as telephones, personal computers, printers, facsimiles, copiers, TV, video decks and audio equipment). Also, it is particularly useful for mechanical and electromechanical parts for home electric appliances and OA equipment, such as printer housings, fixing unit parts and facsimiles all of which require excellent heat resistance and flame retardancy.

The molding technique is not particularly limited and may be injection molding, blow molding or press molding. However, preferably, a resin composition pellet is injection molded by using an injection molding machine.

## Examples

The following examples are provided for the purpose of further illustrating the present invention but are in no way to be taken as limiting. Evaluations were carried out by the following methods.

### 1. evaluation methods

#### (1) Flame retardancy (UL-94 rating)

Flame retardancy was rated in accordance with a vertical burn test specified in US UL-94 standards as a measure of evaluating flame retardancy by using a test piece having a thickness of 1/16 inch (1.6 mm).

The UL-94 vertical burn test is made on a set of five test pieces, and a flame is applied to each of the specimens for 10 seconds two times. This is not applied to a test piece which is burnt down with the first flame application. After a first time of flaming combustion, the combustion time after the flame is removed is measured, and a second flame is applied after extinction. After the second flame application, the combustion time after the flame is removed is measured. A total of 10 combustion times can be measured by tests on a set of five specimens. When burning stops within 10 seconds, the total of 10 combustion times is 50 seconds or less, and cotton is not ignited by flaming drips from any specimen, the specimen is rated V-0. When burning stops within 30 seconds, the total of 10 combustion times is 250 seconds or less, and cotton is not ignited by flaming drips from any specimen, the specimen is rated V-1. When burning stops within 30 seconds, the total of 10 combustion times is 250 seconds or less, and cotton is ignited by flaming drips from any specimen, the specimen is rated V-2. A specimen rated below this is designated as "notV".

#### (2) heat resistance (deflection temperature under load; HDT)

A test piece having a thickness of 6.35 mm (1/4 inch) was used to measure its deflection temperature under a load of 1.8 MPa (HDT) in accordance with the method specified in IS075-2.

#### (3) impact resistance (notched Charpy impact strength)

The notched Charpy impact strength was measured in accordance with ISO 179.

### 2. The following components were used in Examples and Comparative Examples.

#### (1) component A-1 (polylactic acid)

##### (i) component A-1-1 (polylactic acid)

Commercially available polylactic acid (4032D of Nature Works LLC; poly(L-lactic acid) resin) was used (to be referred to as "PLA" hereinafter).

##### (ii) component A-1-2 (stereocomplex polylactic acid)

Stereocomplex polylactic acid produced from poly(L-lactic acid) prepared in the following Production Example 1 and poly(D-lactic acid) prepared in the following Production Example 2 was used.

Production Example 1: production of poly(L-lactic acid) (component ($\alpha$-1)

100 parts by weight of L-lactide (manufactured by Musashino Chemical Laboratory, Ltd. , optical purity of 100 %) and 0.15 part by weight of stearyl alcohol were fed from the raw material feed port of a polymerization reactor having a cooling distillation tube in a nitrogen gas stream. Subsequently, the inside of the reactor was substituted by nitrogen 5 times, and L-lactide was molten at 190°C. When L-lactide was molten completely, 500 $\mu$L of a toluene solution containing 0.005 part by weight of tin octylate was added so as to carry out polymerization at 190°C for 1 hour. After the end of polymerization, 0.082 part by weight of ethyl di-n-hexylphosphonoacetate was added from the raw material feed port and kneaded for 15 minutes. Finally, excess L-lactide was volatilized, and the polymer was discharged from the reactor and cut into a chip to obtain poly(L-lactic acid) (PLLA).

The obtained poly(L-lactic acid) resin had a weight average molecular weight of 151, 000, a glass transition point (Tg) of 55°C, a melting peak temperature (Tmh) of 177°C and a carboxyl group content of 15 eq/ton. The enantiomer average chain length could not be calculated because no syndiotactic sequences could be measured.

Production Example 2: production of poly(D-lactic acid) (component β-1)

The operation of Production Example 1 was repeated except that D-lactide (manufactured by Musashino Chemical Laboratory, Ltd., optical purity of 100 %) was used in place of L-lactide of Production Example 1 to obtain poly (D-lactic acid) (PDLA). The obtained poly(D-lactic acid) resin had a weight average molecular weight of 152,000, a glass transition point (Tg) of 55°C, a melting peak temperature (Tmh) of 177°C and a carboxyl group content of 14 eq/ton. The enantiomer average chain length could not be calculated because no syndiotactic sequences could be measured.

Production Example 3: production of stereocomplex polylactic acid (component A-1-2)

100 parts by weight of polylactic acid resin consisting of 50 parts by weight of PLLA obtained in Production Example 1 and 50 parts by weight of PDLA obtained in Production Example 2 and 0.1 part by weight of 2,2'-methylenebis (4,6-di-tert-butylphenyl)sodium phosphate (ADEKA Stab NA-11 of ADEKA Corporation) were mixed together by means of a blender, and the resulting mixture was dried at 110°C for 5 hours and supplied into the TEX30XSST 30 mmϕ vented double-screw extruder of The Japan Steel Works, Ltd. to be melt extruded into a pellet at a cylinder temperature of 250°C, a screw revolution of 250 rpm, a discharge rate of 9 kg/h and a vent vacuum degree of 3 kPA so as to obtain stereocomplex polylactic acid. The obtained stereocomplex polylactic acid had a weight average molecular weight of 130,000, a glass transition point (Tg) of 58°C, a complex-phase polylactic acid crystal melting peak temperature (Tms) of 220°C, a carboxyl group content of 17 eq/ton, an enantiomer average chain length of 28 and a proportion of melting peaks at 195°C or higher to all the melting peaks in the temperature elevation step of differential scanning calorimeter (DSC) measurement of 100 %. The amount of NA-11 was based on 100 parts by weight of the total of PLLA and PDLA.

[characteristic properties of stereocomplex polylactic acid]

The characteristic properties of the stereocomplex polylactic acid were measured by the following methods.

(a) Weight average molecular weight (Mw) and number average molecular weight (Mn) of polymer:

They were measured by gel permeation chromatography (GPC) and calculated in terms of standard polystyrene. GPC measurement equipment includes the RID-6A differential refractometer of Shimadzu Corporation as a detector and the TSKgelG3000HXL of Tosoh Corporation as a column. Measurement was carried out by using chloroform as an eluant and injecting 10 μl of a sample having a concentration of 1 mg/ml (chloroform containing 1 % of hexafluoroisopropanol) at a temperature of 40°C and a flow rate of 1.0 ml/min.

(b) Carboxyl group concentration
The sample was dissolved in purified o-cresol in a nitrogen gas stream and titrated with an ethanol solution of 0.05 N potassium hydroxide by using Bromocresol Blue as an indicator.
(c) Measurement of differential scanning calorimeter (DSC)
DSC (TA-2920 of TA Instruments, Inc.) was used, and in the first temperature elevation step of the sample, a melting peak at 190°C or higher was derived from a stereo-crystal, its melting temperature was represented by Tms, and its melting enthalpy was represented by Hms. A melting peak at 190°C or lower was derived from a homo-crystal, its melting temperature was represented by Tmh, and its melting enthalpy was represented by Hmh. The parameter indicating the degree of forming the stereocomplex was evaluated from the following equation.

$$\text{Stereo crystal rate} = \Delta Hms/(\Delta Hms + \Delta Hmh) \times 100$$

(d) Enantiomer average chain length
The sample was dissolved in a mixed solvent of HFIP and chloroform in a weight ratio of 1/1 and re-precipitated with methanol. This re-precipitated polymer component was ultrasonically washed with methanol and centrifuged 10 times to remove impurities and the solvent component, the residue was dried in a vacuum drier for one day, and a polylactic acid component which could be a measurement sample was extracted.

The sample extracted as described above was used to measure its enantiomer average chain length as follows. $^{13}$C-NMR equipment: BURKER ARX-500 of Bruker Japan Co., Ltd.
Sample: 50 mg/0.7 ml
Measurement solvent: 10 % HFIP-containing deuterated chloroform

Inside standard: 1 % of tetramethylsilane (TMS) (v/v) Measurement temperature: 27°C (300 K)
Measurement frequency: 125 MHz

According to $^{13}$C-NMR measurement, out of carbon peaks attributed to carbonyl carbon (C=O), peaks (a) (around 170.1-170.3 MHz) were attributed to homo-sequence (LLLLLL or DDDDDD), peaks (b) (around 170.0-169.8 MHz) were attributed to a racemic chain (LLLDDD...), and the average chain length was calculated from the integral value of these peaks based on the following equation.

$$v = \text{integral value of peaks (a)/integral value of peaks (b)}$$

(iii) resin component (component A-2) other than component A-1

(a) Commercially available polybutylene terephthalate resin (TRB-H of Teijin Limited) was used (to be referred to as "PBT" hereinafter). The MVR value measured at 230°C under a load of 3.8 kg was 9.5 $cm^3$/10 min.
(b) Commercially available polycarbonate resin (Panlite L-1225 of Teijin Chemicals Ltd.) was used (to be referred to as "PC" hereinafter). The terminal OH group content was 14 eq/ton and the MVR value measured at 300°C under a load of 1.2 kg was 10.1 $m^3$/10 min.
(c) Commercially available high-impact polystyrene (PSJ Polystyrene H9152 of PS Japan Corporation) was used (to be referred to as "HIPS" hereinafter). The MVR value at 200°C under a load of 5 kg was 5.7 $cm^3$/10 min.
(d) Commercially available ABS resin (Santac UT-61 of Nippon A & L Inc.) was used (to be referred to as "ABS" hereinafter). The MVR value at 220°C under a load of 10 kg was 35 $cm^3$/10 min.
(e) Commercially available polyphenylene ether resin (Zylon P-402 of Asahi Chemical Industry Co., Ltd.) was used (to be referred to as "PPE" hereinafter).

(2) component B (organic phosphorus compound)

(i) 2,4,8,10-tetraoxa-3,9-diphosphaspiro[5,5]undecane, 3,9-dibenzyl-3,9-dioxide {organic phosphorus compound of the above formula (1-a)} synthesized in Preparation Example 1 below was used (to be referred to as "FR-1" hereinafter).
(ii) 2,4,8,10-tetraoxa-3,9-diphosphaspiro[5,5]undecane, 3,9-dibenzyl-3,9-dioxide {organic phosphorus compound of the above formula (1-a)} synthesized in Preparation Example 2 below was used (to be referred to as "FR-2" hereinafter).
(iii) 2,4,8,10-tetraoxa-3,9-diphosphaspiro[5,5]undecane, 3,9-di-α-methylbenzyl-3,9-dioxide {organic phosphorus compound of the above formula (1-b)} synthesized in Preparation Example 3 below was used (to be referred to as "FR-3" hereinafter).
(iv) 2,4,8,10-tetraoxa-3,9-diphosphaspiro[5,5]undecane, 3,9-di(2-phenylethyl)-3,9-dioxide {organic phosphorus compound of the above formula (1-c)} synthesized in Preparation Example 4 below was used (to be referred to as "FR-4" hereinafter).
(v) 2,4,8,10-tetraoxa-3,9-diphosphaspiro[5.5]undecane, 3,9-bis(diphenylmethyl)-3,9-dioxide {organic phosphorus compound of the above formula (1-d)}} synthesized in Preparation Example 5 below was used (to be referred to as "FR-5" hereinafter).

Preparation Example 1

Preparation of 2,4,8,10-tetraoxa-3,9-diphosphaspiro[5.5]undecane, 3,9-dibenzyl-3,9-dioxide (FR-1)

816.9 g (6.0 moles) of pentaerythritol, 19.0 g (0.24 mole) of pyridine and 2,250.4 g (24.4 moles) of toluene were fed to a reactor equipped with a thermometer, a condenser and a dropping funnel and stirred. 1,651.8 g (12.0 moles) of phosphorus trichloride was added to the reactor by using the dropping funnel and then heated and stirred at 60°C after addition. After a reaction, the reactor was cooled to room temperature, 26.50 parts of methylene chloride was added to the obtained reaction product, and 889.4 g (12.0 moles) of tertiary butanol and 150.2 g (1.77 moles) of methylene chloride were added dropwise under cooling with ice. The obtained crystal was washed with toluene and methylene chloride and filtered. The obtained filtrate was dried at 80°C and 1.33 x $10^2$ Pa for 12 hours to obtain 1,341.1 g (5.88 moles) of a white solid. It was confirmed by $^{31}$P and $^1$HNMR spectra that the obtained solid was 2,4,8,10-tetraoxa-3,9-diphosphaspiro[5.5]undecane, 3,9-dihydro-3,9-dioxide.

1,341.0 g (5.88 moles) of the obtained 2,4,8,10-tetraoxa-3,9-diphosphaspiro[5.5]undecane, 3,9-dihydro-3,9-dioxide and 6,534.2 g (89.39 moles) of DMF were fed to a reactor equipped with a thermometer, a condenser and a dropping funnel and stirred. 648.7 g (12.01 moles) of sodium methoxide was added to the reactor under cooling with ice. After 2 hours of stirring under cooling with ice, they were stirred at room temperature for 5 hours. Further, after DMF was distilled off, 2,613.7 g (35.76 moles) of DMF was added, and 2,037.79 g (11.91 moles) of benzyl bromide was added dropwise to the reaction mixture under cooling with ice. After 3 hours of stirring under cooling with ice, DMF was distilled off, 8 liters of water was added, and the precipitated solid was collected by filtration and washed with 2 liters of water twice. The obtained roughly purified product and 4 liters of methanol were put into a reactor equipped with a condenser and a stirrer and refluxed for about 2 hours. After the reactor was cooled to room temperature, the crystal was separated by filtration and washed with 2 liters of methanol, and the obtained filtrate was dried at 120°C and 1.33 x $10^2$ Pa for 19 hours to obtain 1,863.5 g (4.56 moles) of a white flaky crystal. It was confirmed by $^{31}$P and $^{1}$HNMR spectra and elemental analysis that the obtained crystal was 2,4,8,10-tetraoxa-3,9-diphosphaspiro[5.5]undecane, 3,9-dibenzyl-3,9-dioxide. The yield rate was 76 %, and the $^{31}$PNMR purity was 99 %. The HPLC purity measured by the method of this text was 99 %. The acid value was 0.06 mgKOH/g.

$^{1}$H-NMR (DMSO-d6, 300 MHz): $\delta$7.2 - 7.4 (m, 10H), 4.1 - 4.5 (m, 8H), 3.5 (d, 4H), $^{31}$P-NMR (DMSO-$d_6$, 120 MHz): $\delta$23.1 (S), melting point: 255 - 256°C, elemental analysis calculated values: C, 55.89; H, 5.43, measurement values: C, 56.24; H, 5.35

Preparation Example 2

preparation of 2,4,8,10-tetraoxa-3,9-diphosphaspiro[5.5]undecane, 3,9-dibenzyl-3,9-dioxide (FR-2)

22.55 g (0.055 mole) of 3,9-dibenzyloxy-2,4,8,10-tetraoxa-3,9-diphosphaspiro[5.5]undecane, 19.01 g (0.11 mole) of benzyl bromide and 33.54 g (0.32 mole) of xylene were fed to a reactor equipped with a stirrer, a thermometer and a condenser, and dry nitrogen was let flow into the reactor under agitation at room temperature. Then, heating was started with an oil bath, and the reaction product was heated and stirred at a reflux temperature (about 130°C) for 4 hours. After heating, the reaction product was left to be cooled to room temperature, and 20 ml of xylene was added and further stirred for 30 minutes. The precipitated crystal was separated by filtration and washed with 20 mL of xylene twice. The obtained roughly purified product and 40 ml of methanol were put into a reactor equipped with a condenser and a stirrer and refluxed for about 2 hours. After cooling to room temperature, the crystal was separated by filtration and washed with 20 ml of methanol, and the obtained filtrate was dried at 120°C and 1.33 x $10^2$ Pa for 19 hours to obtain a white flaky crystal. It was confirmed by mass spectral analysis, $^{1}$H and $^{31}$P nuclear magnetic resonance spectral analysis and elemental analysis that the product was bisbenzyl pentaerythritol diphosphonate. The yield was 20.60 g, the yield rate was 91 %, and the $^{31}$PNMR purity was 99 %. The HPLC purity measured by the method of this text was 99 %. The acid value was 0.05 mgKOH/g. $^{1}$H-NMR (DMSO-$d_6$, 300 MHz): $\delta$7.2 - 7.4 (m, 10H), 4.1 - 4.5 (m, 8H), 3.5 (d, 4H), $^{31}$P-NMR (DMSO-$d_6$, 120 MHz): $\delta$23.1 (S), melting point: 257°C

Preparation Example 3

preparation of 2,4,8,10-tetraoxa-3,9-diphosphaspiro[5.5]undecane, 3,9-di$\alpha$-methylbenzyl-3,9-dioxide (FR-3)

816.9 g (6.0 moles) of pentaerythritol, 19.0 g (0.24 mole) of pyridine and 2,250.4 g (24.4 moles) of toluene were fed to a reactor equipped with a thermometer, a condenser and a dropping funnel and stirred. 1,651.8 g (12.0 moles) of phosphorus trichloride was added to the reactor by using the dropping funnel and then heated and stirred at 60°C after addition. After a reaction, the reactor was cooled to room temperature, 5,180.7 g (61.0 moles) of methylene chloride was added to the obtained reaction product, and 889.4 g (12.0 moles) of tertiary butanol and 150.2 g (1.77 moles) of methylene chloride were added dropwise under cooling with ice. The obtained crystal was washed with toluene and methylene chloride and filtered. The obtained filtrate was dried at 80°C and 1.33 x $10^2$ Pa for 12 hours to obtain 1,341.1 g (5.88 moles) of a white solid. It was confirmed by $^{31}$P and $^{1}$HNMR spectra that the obtained solid was 2,4,8,10-tetraoxa-3,9-diphosphaspiro[5.5]undecane, 3,9-dihydro-3,9-dioxide.

1,341.0 g (5.88 moles) of the obtained 2,4,8,10-tetraoxa-3,9-diphosphaspiro[5.5]undecane, 3,9-dihydro-3,9-dioxide and 6,534.2 g (89.39 moles) of DMF were fed to a reactor equipped with a thermometer, a condenser and a dropping funnel and stirred. 648.7 g (12.01 moles) of sodium methoxide was added to the reactor under cooling with ice. After 2 hours of stirring under cooling with ice, they were stirred at room temperature for 5 hours. Further, after DMF was distilled off, 2,613.7 g (35.76 moles) of DMF was added, and 2,204.06 g (11.91 moles) of 1-phenylethyl bromide was added dropwise to the reaction mixture under cooling with ice. After 3 hours of stirring under cooling with ice, DMF was distilled off, 8 liters of water was added, and the precipitated solid was collected by filtration and washed with 2 liters of water twice. The obtained roughly purified product and 4 liters of methanol were put into a reactor equipped with a condenser and a stirrer and refluxed for about 2 hours. After the reactor was cooled to room temperature, the crystal

was separated by filtration and washed with 2 liters of methanol, and the obtained filtrate was dried at 120 °C and 1.33 x $10^2$ Pa for 19 hours to obtain 1,845.9 g (4.23 moles) of a white flaky crystal. It was confirmed by $^{31}$PNMR and $^{1}$HNMR spectra and elemental analysis that the obtained solid was 2,4,8,10-tetraoxa-3,9-diphosphaspiro[5.5]undecane, 3, 9-di$\alpha$-methylbenzyl-3,9-dioxide. The $^{31}$PNMR purity was 99 %. The HPLC purity measured by the method of this text was 99 %. The acid value was 0.03 mgKOH/g.

$^{1}$H-NMR ($CDCl_3$, 300 MHz): $\delta$7.2 - 7.4 (m, 10H), 4.0 - 4.2 (m, 4H), 3.4 - 3.8 (m, 4H), 3.3 (qd, 4H), 1. 6 (ddd, 6H), $^{31}$P-NMR ($CDCl_3$, 120 MHz): $\delta$28.7 (S), melting point: 190 - 210°C, elemental analysis calculated values: C, 57.80; H, 6.01, measurement values: C, 57.83; H, 5.96

Preparation Example 4

preparation of 2,4,8,10-tetraoxa-3,9-diphosphaspiro[5.5]undecane, 3,9-di(2-phenylethyl)-3,9-dioxide (FR-4)

816.9 g (6.0 moles) of pentaerythritol, 19.0 g (0.24 mole) of pyridine and 2,250.4 g (24.4 moles) of toluene were fed to a reactor equipped with a thermometer, a condenser and a dropping funnel and stirred. 1,651.8 g (12.0 moles) of phosphorus trichloride was added to the reactor by using the dropping funnel and then heated and stirred at 60°C after addition. After a reaction, the reactor was cooled to room temperature, 5,180.7 g (61.0 moles) of methylene chloride was added to the obtained reaction product, and 889.4 g (12. 0 moles) of tertiary butanol and 150.2 g (1.77 moles) of methylene chloride were added dropwise under cooling with ice. The obtained crystal was washed with toluene and methylene chloride and filtered. The obtained filtrate was dried at 80°C and 1.33 x $10^2$ Pa for 12 hours to obtain 1,341.1 g (5.88 moles) of a white solid. It was confirmed by $^{31}$P and $^{1}$HNMR spectra that the obtained solid was 2,4,8,10-tetraoxa-3,9-diphosphaspiro[5.5]undecane, 3,9-dihydro-3,9-dioxide.

1,341.0 g (5.88 moles) of the obtained 2,4,8,10-tetraoxa-3,9-diphosphaspiro[5.5]undecane, 3,9-dihydro-3,9-dioxide and 6,534.2 g (89.39 moles) of DMF were fed to a reactor equipped with a thermometer, a condenser and a dropping funnel and stirred. 648.7 g (12.01 moles) of sodium methoxide was added to the reactor under cooling with ice. After 2 hours of stirring under cooling with ice, they were stirred at room temperature for 5 hours. After DMF was distilled off, 2,613.7 g (35.76 moles) of DMF was added, and 2,183.8 g (11.8 moles) of (2-bromoethyl)benzene was added dropwise to the reaction mixture under cooling with ice. After 3 hours of stirring under cooling with ice, DMF was distilled off, 8 liters of water was added, and the precipitated solid was collected by filtration and washed with 2 liters of water twice. The obtained roughly purified product and 4 liters of methanol were put into a reactor equipped with a condenser and a stirrer and refluxed for about 2 hours. After the reactor was cooled to room temperature, the crystal was separated by filtration and washed with 2 liters of methanol, and the obtained filtrate was dried at 120°C and 1.33 x $10^2$ Pa for 19 hours to obtain 1,924.4g (4.41 moles) of a white powder. It was confirmed by $^{31}$PNMR and $^{1}$HNMR spectra and elemental analysis that the obtained solid was 2,4,8,10-tetraoxa-3,9-diphosphaspiro[5.5]undecane, 3,9-di (2-phenylethyl)-3,9-dioxide. The $^{31}$PNMR purity was 99 %. The HPLC purity measured by the method of this text was 99 %. The acid value was 0.03 mgKOH/g. $^{1}$H-NMR ($CDCl_3$, 300 MHz): 87.1 - 7.4 (m, 10H), 3.85 - 4.65 (m, 8H), 2.90 - 3.05 (m, 4H), 2.1 - 2.3 (m, 4H), $^{31}$P-NMR ($CDCl_3$, 120 MHz): $\delta$31.5 (S), melting point: 245 - 246°C, elemental analysis calculated values: C, 57.80; H, 6.01, measurement values: C, 58.00; H, 6.07

Preparation Example 5

preparation of 2,4,8,10-tetraoxa-3,9-diphosphaspiro[5.5]undecane, 3,9-bis(diphenylmethyl)-3,9-dioxide (FR-6)

2,058.5 g (7.22 moles) of diphenylmethyl phosphonic acid dichloride, 468.3 g (3.44 moles) of pentaerythritol, 1,169.4 g (14.8 moles) of pyridine and 8,200 g of chloroform were fed to a 10-liter three-necked flask equipped with a stirrer, an agitation blade, a reflux cooling tube and a thermometer, heated at 60°C in a nitrogen gas stream and stirred for 6 hours. After the end of a reaction, chloroform was substituted by methylene chloride, and 6 liters of distilled water was added to the reaction mixture and stirred to precipitate a white powder. The white powder was collected by suction filtration, and the obtained white product was washed with methanol and dried at 100°C and 1.33 x $10^2$ Pa for 10 hours to obtain 1,156.2 g of a white solid. It was confirmed by $^{31}$P-NMR and $^{1}$H-NMR spectra and elemental analysis that the obtained solid was 2,4,8,10-tetraoxa-3,9-diphosphaspiro[5.5]undecane, 3,9-bis(diphenylmethyl)-3,9-dioxide. The $^{31}$P-NMR purity was 99 %. The HPLC purity measured by the method of this text was 99 %. The acid value was 0.3 mgKOH/g. $^{1}$H-NMR (DMSO-$d_6$, 300 MHz): $\delta$7.20 - 7.60 (m, 20H), 5.25 (d, 2H), 4.15 - 4.55 (m, 8H), $^{31}$P-NMR (DMSO-$d_6$, 120 MHz): $\delta$20.9, melting point: 265°C, elemental analysis calculated values: C, 66.43; H, 5.39, measurement values: c, 66.14; H. 5.41

[characteristic properties of organic phosphorus compound]

The characteristic properties of the organic phosphorus compound were measured by the following methods.

(a) Acid value of organic phosphorus compound This was measured in accordance with JIS-K-3504.

(b) HPLC purity of organic phosphorus compound

A sample was dissolved in a mixed solution of acetonitrile and water in a volume ratio of 6:4, and 5 μl of the resulting solution was injected into a column. The Develosil ODS-7 having a length of 300 mm and a diameter of 4 mm of Nomura Chemical Co., Ltd. was used as the column, and the column temperature was set to 40°C. A UV-260 nm detector was used.

(c) $^{31}$PNMR purity of organic phosphorus compound

The nuclear magnetic resonance of a phosphorus atom was measured (DMSO-$d_6$, 162 MHz, integrated number of times of 3072) with a nuclear magnetic resonance measuring instrument (JNM-AL400 of JEOL Ltd.) to obtain an integral area ratio as the $^{31}$PNMR purity of the phosphorus compound.

(3) Filler (component C)

(i) A commercially available milled fiber (PFE-301 of Nitto Boseki Co., Ltd.) was used (to be referred to as "MF" hereinafter).

(ii) A commercially available chopped strand (CS3PE-455 of Nitto Boseki Co., Ltd.) was used (to be referred to as "CS" hereinafter).

(4) Impact resistance modifier (component D)

A commercially available hydrogenated styrene-based thermoplastic elastomer (Septon 8006 of Kuraray Co., Ltd.) was used. (5) Another organic phosphorus compound

1,3-phenylenebis[di(2,6-dimethylphenyl)phosphate] (PX-200 of Daihachi Chemical Industry, Co., Ltd.) was used (to be referred to as "PX-200" hereinafter).

(6) Talc

Commercially available talc (P-3 of Nippon Talc Co., Ltd.) was used.

3. Examples 1 to 13 and Comparative Examples 1 to 6

The amounts (parts by weight) shown in Tables 1 and 2 of components shown in Tables 1 and 2 were mixed together by means of a tumbler, and the resulting mixtures were pelletized by means of a 15 mm-diameter double-screw extruder (KZW15 of Technovel Corporation) . The obtained pellets were dried with a hot air drier at 80°C for 24 hours. The dried pellets were molded by means of an injection molding machine (J75EIII of The Japan Steel Works, Ltd.). The evaluation results of the molded plates are shown in Tables 1 and 2.

Table 1

| Component | | Unit | Ex.1 | Ex.2 | Ex.3 | Ex.4 | Ex.5 | Ex.6 | Ex.7 |
|---|---|---|---|---|---|---|---|---|---|
| Composition | Component A-1-1 | Type | PLA | PLA | PLA | PLA | PLA | PLA | PLA |
| | | parts by weight | 100 | 100 | 100 | 100 | 100 | 100 | 100 |
| | Component C | Type | MF | MF | CS | CS | MF | MF | CS |
| | | parts by weight | 50 | 50 | 50 | 50 | 50 | 50 | 50 |
| | Component B | Type | FR-1 | FR-1 | FR-1 | FR-1 | FR-1 | FR-2 | FR-2 |
| | | parts by weight | 20 | 30 | 20 | 30 | 30 | 30 | 30 |
| | Component D | parts by weight | 10 | 10 | 10 | 10 | 10 | 10 | 10 |
| | Talc | parts by weight | 2 | 2 | 2 | 2 | 5 | 2 | 2 |
| Flame retardancy | UL-94 test | Thickness of test sample | 1.6mm | 1.6mm | 1.6mm | 1.6mm | 1.6mm | 1.6mm | 1.6mm |
| | | UL rating | V-2 | V-0 | V-2 | V-0 | V-0 | V-0 | V-0 |
| HDT | ISO 75-2 1.8MPa | °C | 96 | 95 | 125 | 127 | 96 | 95 | 127 |
| Charpy impact strength | ISO 179 notched | $kJ/m^2$ | 10 | 9 | 23 | 22 | 9 | 10 | 22 |

Ex.: Example

Table 1 (continued)

| Component | | Unit | Ex. 8 | Ex.9 | Ex.10 | Ex.11 | Ex.12 | Ex.13 |
|---|---|---|---|---|---|---|---|---|
| Composition | Component A-1-1 | Type | PLA | PLA | PLA | PLA | PLA | PLA |
| | | parts by weight | 100 | 100 | 100 | 100 | 100 | 100 |
| | Component C | Type | MF | CS | MF | CS | MF | CS |
| | | parts by weight | 50 | 50 | 50 | 50 | 50 | 50 |
| | Component B | Type | FR-3 | FR-3 | FR-4 | FR-4 | FR-5 | FR-5 |
| | | parts by weight | 30 | 30 | 30 | 30 | 30 | 30 |
| | Component D | parts by weight | 10 | 10 | 10 | 10 | 10 | 10 |
| | Talc | parts by weight | 2 | 2 | 2 | 2 | 2 | 2 |
| Flame retardancy | UL-94 test | Thickness of test sample | 1.6mm | 1.6mm | 1.6mm | 1.6mm | 1.6mm | 1.6mm |
| | | UL rating | V-0 | V-0 | V-0 | V-0 | V-0 | V-0 |
| HDT | ISO 75-2 1.8MPa | °C | 97 | 126 | 93 | 123 | 95 | 125 |
| Charpy impact strength | ISO 179 notched | $kJ/m^2$ | 9 | 21 | 11 | 22 | 10 | 21 |

Ex.: Example

Table 2

| Component | | Unit | C.Ex.1 | C.Ex.2 | C.Ex.3 | C.Ex.4 | C.Ex.5 | C.Ex.6 |
|---|---|---|---|---|---|---|---|---|
| Composition | Component A-1-1 | Type | PLA | PLA | PLA | PLA | PLA | PLA |
| | | parts by weight | 100 | 100 | 100 | 100 | 100 | 100 |
| | Component C | Type | MF | CS | MF | MF | CS | CS |
| | | parts by weight | 50 | 50 | 50 | 50 | 50 | 50 |
| | Component B | Type | - | - | PX-200 | PX-200 | PX-200 | PX-200 |
| | | parts by weight | - | - | 20 | 30 | 20 | 30 |
| | Component D | parts by weight | 10 | 10 | 10 | 10 | 10 | 10 |
| | Talc | parts by weight | 2 | 2 | 2 | 2 | 2 | 2 |
| Flame retardancy | UL-94 test | Thickness of test sample | 1.6mm | 1.6mm | 1.6mm | 1.6mm | 1.6mm | 1.6mm |
| | | UL rating | notV | notV | V-2 | V-2 | V-2 | V-2 |
| HDT | ISO 75-2 1.8MPa | °C | 95 | 125 | 64 | 59 | 116 | 109 |
| Charpy impact strength | ISO 179 notched | $kJ/m^2$ | 11 | 23 | 11 | 10 | 22 | 21 |
| C.Ex.: Comparative Example | | | | | | | | |

Examples 14 to 44 and Comparative Examples 7 to 35

The amounts (parts by weight) shown in Tables 3 to 6 of components shown in Tables 3 to 6 were mixed together by means of a tumbler, and the resulting mixtures were pelletized by means of a 15 mm-diameter double-screw extruder (KZW15 of Technovel Corporation). The obtained pellets were dried with a hot air drier at 100°C for 24 hours. The dried pellets were molded by means of an injection molding machine (J75EIII of The Japan Steel Works, Ltd.). The evaluation results of the molded plates are shown in Tables 3 to 6.

Table 3

| Component | | Unit | Ex.14 | Ex.15 | Ex.16 | Ex.17 | Ex.18 | Ex.19 | Ex.20 | Ex.21 |
|---|---|---|---|---|---|---|---|---|---|---|
| Composition | Component A-1-1 | parts by weight | - | - | - | - | - | - | - | - |
| | Component A-1-2 | parts by weight | 100 | 100 | 100 | 100 | 100 | 100 | 100 | 100 |
| | Component A-2 | Type | - | - | - | - | - | - | - | - |
| | | parts by weight | - | - | - | - | - | - | - | - |
| | Component B | Type | FR-1 | FR-1 | FR-1 | FR-1 | FR-2 | FR-2 | FR-3 | FR-3 |
| | | parts by weight | 20 | 30 | 20 | 30 | 30 | 30 | 30 | 30 |
| | Component C | Type | MF | MF | CS | CS | MF | CS | MF | CS |
| | | parts by weight | 50 | 50 | 50 | 50 | 50 | 50 | 50 | 50 |
| | Component D | parts by weight | 10 | 10 | 10 | 10 | 10 | 10 | 10 | 10 |
| | Talc | parts by weight | 1 | 1 | 1 | 1 | 1 | 1 | 1 | 1 |
| Flame retardancy | UL-94 test | Thickness of test sample | 1.6mm | 1.6mm | 1.6mm | 1.6mm | 1.6mm | 1.6mm | 1.6mm | 1.6mm |
| | | UL rating | V-2 | V-0 | V-2 | V-0 | V-0 | V-0 | V-0 | V-0 |
| HDT | ISO 75-2 1.8MPa | °C | 112 | 113 | 194 | 195 | 113 | 195 | 115 | 197 |
| Charpy impact strength | ISO 179 notched | $kJ/m^2$ | 10 | 9 | 22 | 20 | 9 | 20 | 9 | 19 |

Ex.: Example

Table 3 (continued)

| Component | | Unit | Ex.22 | Ex.23 | Ex.24 | Ex.25 | Ex.26 | Ex.27 | Ex.28 |
|---|---|---|---|---|---|---|---|---|---|
| Composition | Component A-1-1 | parts by weight | - | - | - | - | - | - | - |
| | Component A-1-2 | parts by weight | 100 | 100 | 100 | 100 | 100 | 100 | 100 |
| | Component A-2 | Type | - | - | - | - | PBT | PC | PPE |
| | | parts by weight | - | - | - | - | 15 | 15 | 10 |
| | Component B | Type | FR-4 | FR-4 | FR-5 | FR-5 | FR-1 | FR-1 | FR-1 |
| | | parts by weight | 30 | 30 | 30 | 30 | 25 | 25 | 20 |
| | Component C | Type | MF | CS | MF | CS | MF | MF | MF |
| | | parts by weight | 50 | 50 | 50 | 50 | 50 | 50 | 50 |
| | Component D | parts by weight | 10 | 10 | 10 | 10 | 10 | 10 | 10 |
| | talc | parts by weight | 1 | 1 | 1 | 1 | 1 | 1 | 1 |
| Flame retardancy | UL-94 test | Thickness of test sample | 1.6mm | 1.6mm | 1.6mm | 1.6mm | 1.6mm | 1.6mm | 1.6mm |
| | | UL rating | V-0 | V-0 | V-0 | V-0 | V-0 | V-0 | V-0 |
| HDT | ISO 75-2 1.8MPa | °C | 111 | 189 | 112 | 191 | 116 | 115 | 112 |
| Charpy impact strength | ISO 179 notched | $kJ/m^2$ | 10 | 22 | 10 | 21 | 10 | 11 | 10 |

Ex. : Example

Table 4

| Component | | Unit | Ex.29 | Ex.30 | Ex.31 | Ex.32 | Ex.33 | Ex.34 | Ex.35 | Ex.36 |
|---|---|---|---|---|---|---|---|---|---|---|
| Composition | Component A-1-1 | Parts by weight | - | - | - | - | - | - | - | - |
| | Component A-1-2 | Parts by weight | 100 | 100 | 100 | 100 | 100 | 100 | 100 | 100 |
| | Component A-2 | Type | PBT | PC | PPE | PC | PPE | PC | PPE | PC |
| | | parts by weight | 15 | 15 | 10 | 15 | 10 | 15 | 10 | 15 |
| | Component B | Type | FR-1 | FR-1 | FR-1 | FR-3 | FR-3 | FR-3 | FR-3 | FR-4 |
| | | parts by weight | 30 | 30 | 25 | 25 | 20 | 30 | 25 | 25 |
| | Component C | Type | CS | CS | CS | MF | MF | CS | CS | MF |
| | | parts by weight | 50 | 50 | 50 | 50 | 50 | 50 | 50 | 50 |
| | Component D | parts by weight | 10 | 10 | 10 | 10 | 10 | 10 | 10 | 10 |
| | talc | parts by weight | 1 | 1 | 1 | 1 | 1 | 1 | 1 | 1 |
| Flame retardancy | UL-94 test | Thickness of test sample | 1.6mm | 1.6mm | 1.6mm | 1.6mm | 1.6mm | 1.6mm | 1.6mm | 1.6mm |
| | | UL rating | V-0 | V-0 | V-0 | V-0 | V-0 | V-0 | V-0 | V-0 |
| HDT | ISO 75-2 1.8MPa | °C | 196 | 195 | 195 | 117 | 115 | 197 | 196 | 112 |
| Charpy impact strength | ISO 179 notched | $kJ/m^2$ | 20 | 22 | 19 | 9 | 9 | 19 | 20 | 11 |

Ex.: Example

Table 4 (continued)

| Component | | Unit | Ex. 37 | Ex. 38 | Ex. 39 | Ex. 40 | Ex. 41 | Ex. 42 | Ex. 43 | Ex. 44 |
|---|---|---|---|---|---|---|---|---|---|---|
| Composition | Component A-1-1 | parts by weight | - | - | - | - | - | - | - | - |
| | Component A-1-2 | parts by weight | 100 | 100 | 100 | 100 | 100 | 100 | 100 | 100 |
| | Component A-2 | Type | PPE | PC | PPE | PC | PPE | PC | PPE | PPE |
| | | parts by weight | 10 | 15 | 10 | 15 | 10 | 15 | 10 | 10 |
| | Component B | Type | FR-4 | FR-4 | FR-4 | FR-5 | FR-5 | FR-5 | FR-5 | FR-1 |
| | | parts by weight | 20 | 30 | 25 | 25 | 20 | 30 | 25 | 25 |
| | Component C | Type | MF | CS | CS | MF | MF | CS | CS | CS |
| | | parts by weight | 50 | 50 | 50 | 50 | 50 | 50 | 50 | 30 |
| | Component D | parts by weight | 10 | 10 | 10 | 10 | 10 | 10 | 10 | 5 |
| | Talc | parts by weight | 1 | 1 | 1 | 1 | 1 | 1 | 1 | 3 |
| Flame retardancy | UL-94 test | Thickness of test sample | 1.6mm | 1.6mm | 1.6mm | 1.6mm | 1.6mm | 1.6mm | 1.6mm | 1.6mm |
| | | UL rating | V-0 | V-0 | V-0 | V-0 | V-0 | V-0 | V-0 | V-0 |
| HDT | ISO 75-2 1.8MPa | °C | 110 | 192 | 191 | 114 | 116 | 194 | 194 | 163 |
| Charpy impact strength | ISO 179 notched | $kJ/m^2$ | 11 | 22 | 21 | 10 | 9 | 20 | 21 | 13 |

Ex.: Example

Table 5

| Component | | Unit | C.Ex.7 | C.Ex.8 | C.Ex.9 | C. Ex.10 | C. Ex.11 | C. Ex.12 | C. Ex.13 | C. Ex.14 |
|---|---|---|---|---|---|---|---|---|---|---|
| Composition | Component A-1-1 | Type | PLA | - | - | - | - | - | - | - |
| | | parts by weight | 10 | - | - | - | - | - | - | - |
| | Component A-1-2 | parts by weight | 100 | 100 | 100 | 100 | 100 | 100 | 100 | 100 |
| | Component A-2 | Type | — | PBT | PC | HIPS | ABS | PPE | - | - |
| | | parts by weight | — | 15 | 15 | 10 | 10 | 10 | - | - |
| | Component B | Type | - | - | - | - | - | - | - | - |
| | | parts by weight | - | - | - | - | - | - | - | - |
| | Component C | Type | - | - | - | - | - | - | MF | CS |
| | | parts by weight | - | - | - | - | - | - | 50 | 50 |
| | Component D | parts by weight | - | - | - | - | - | - | 10 | 10 |
| | Talc | parts by weight | 1 | 1 | 1 | 1 | 1 | 1 | 1 | 1 |
| Flame retardancy | UL-94 test | Thickness of test sample | 1.6mm | 1.6mm | 1.6mm | 1.6mm | 1.6mm | 1.6mm | 1.6mm | 1.6mm |
| | | UL rating | notV | notV | notV | notV | notV | notV | notV | notV |
| HDT | ISO 75-2 1.8MPa | °C | 65 | 67 | 68 | 67 | 68 | 68 | 113 | 195 |
| Charpy impact strength | ISO 179 notched | $kJ/m^2$ | 2 | 4 | 3 | 3 | 3 | 4 | 11 | 23 |

C.Ex.: Comparative Example

Table 5 (continued)

| Component | | Unit | C. Ex.15 | C. Ex.16 | C. Ex.17 | C. Ex.18 | C. Ex.19 | C. Ex.20 | C. Ex.21 |
|---|---|---|---|---|---|---|---|---|---|
| Composition | Component A-1-1 | Type | - | - | - | - | - | - | PLA |
| | | parts by weight | - | - | - | - | - | - | 10 |
| | Component A-1-2 | parts by weight | 100 | 100 | 100 | 100 | 100 | 100 | 100 |
| | Component A-2 | Type | PBT | PC | PPE | PBT | PC | PPE | — |
| | | parts by weight | 15 | 15 | 10 | 15 | 15 | 10 | — |
| | Component B | Type | - | - | - | - | - | - | PX-200 |
| | | parts by weight | - | - | - | - | - | - | 5 |
| | Component C | Type | MF | MF | MF | CS | CS | CS | - |
| | | parts by weight | 50 | 50 | 50 | 50 | 50 | 50 | - |
| | Component D | parts by weight | 10 | 10 | 10 | 10 | 10 | 10 | - |
| | talc | parts by weight | 1 | 1 | 1 | 1 | 1 | 1 | 1 |
| Flame retardancy | UL-94 test | Thickness of test sample | 1.6mm | 1.6mm | 1.6mm | 1.6mm | 1.6mm | 1.6mm | 1.6mm |
| | | UL rating | notV | notV | notV | notV | notV | notV | V-2 |
| HDT | ISO 75-2 1.8MPa | °C | 117 | 115 | 114 | 197 | 194 | 195 | 60 |
| Charpy impact strength | ISO 179 notched | $kJ/m^2$ | 12 | 13 | 12 | 23 | 24 | 22 | 2 |

C.Ex.: Comparative Example

Table 6

| Component | | Unit | C. Ex. 22 | C. Ex.23 | C. Ex.24 | C. Ex.25 | C. Ex.26 | C. Ex.27 | C. Ex.28 |
|---|---|---|---|---|---|---|---|---|---|
| Composition | Component A-1-1 | Type | PLA | - | - | - | - | - | - |
| | | parts by weight | 10 | - | - | - | - | - | - |
| | Component A-1-2 | parts by weight | 100 | 100 | 100 | 100 | 100 | 100 | 100 |
| | Component A-2 | Type | — | PBT | PC | HIPS | ABS | PPE | - |
| | | parts by weight | — | 15 | 15 | 10 | 10 | 10 | - |
| | Component B | Type | PX-200 | PX-200 | PX-200 | PX-200 | PX-200 | PX-200 | PX-200 |
| | | parts by weight | 15 | 20 | 20 | 30 | 30 | 15 | 30 |
| | Component C | Type | - | - | - | - | - | - | MF |
| | | parts by weight | - | - | - | - | - | - | 50 |
| | Component D | parts by weight | - | - | - | - | - | - | 10 |
| | talc | parts by weight | 1 | 1 | 1 | 1 | 1 | 1 | 1 |
| Flame retardancy | UL-94 test | Thickness of test sample | 1.6mm | 1.6mm | 1.6mm | 1.6mm | 1.6mm | 1.6mm | 1.6mm |
| | | UL rating | V-2 | V-2 | V-2 | V-2 | V-2 | V-2 | V-2 |
| HDT | ISO 75-2 1.8MPa | °C | 55 | 56 | 55 | 57 | 56 | 54 | 75 |
| Charpy impact strength | ISO 179 notched | $kJ/m^2$ | 2 | 3 | 4 | 3 | 3 | 3 | 9 |

C.Ex.: Comparative Example

Table 6(continued)

| Component | | Unit | C.Ex.29 | C.Ex.30 | C.Ex.31 | C.Ex.32 | C.Ex.33 | C.Ex.34 | C.Ex.35 |
|---|---|---|---|---|---|---|---|---|---|
| Composition | Component A-1-1 | Type | - | - | - | - | - | - | - |
| | | parts by weight | - | - | - | - | - | - | - |
| | Component A-1-2 | parts by weight | 100 | 100 | 100 | 100 | 100 | 100 | 100 |
| | Component A-2 | Type | - | PBT | PC | PPE | PBT | PC | PPE |
| | | parts by weight | - | 15 | 15 | 10 | 15 | 15 | 10 |
| | Component B | Type | PX-200 | PX-200 | PX-200 | PX-200 | PX-200 | PX-200 | PX-200 |
| | | parts by weight | 30 | 25 | 25 | 20 | 30 | 30 | 25 |
| | Component C | Type | CS | MF | MF | MF | CS | CS | CS |
| | | parts by weight | 50 | 50 | 50 | 50 | 50 | 50 | 50 |
| | Component D | parts by weight | 10 | 10 | 10 | 10 | 10 | 10 | 10 |
| | Talc | parts by weight | 1 | 1 | 1 | 1 | 1 | 1 | 1 |
| Flame retardancy | UL-94 test | Thickness of test sample | 1.6mm | 1.6mm | 1.6mm | 1.6mm | 1.6mm | 1.6mm | 1.6mm |
| | | UL rating | V-2 | V-2 | V-2 | V-2 | V-2 | V-2 | V-2 |
| HDT | ISO 75-2 1.8MPa | °C | 125 | 72 | 73 | 77 | 122 | 120 | 123 |
| Charpy impact strength | ISO 179 notched | $kJ/m^2$ | 20 | 11 | 12 | 10 | 23 | 23 | 22 |

C.Ex.: Comparative Example

Effect of the Invention

The flame retardant resin composition of the present invention and a molded article formed therefrom have the following advantages over a conventional resin composition obtained from a plant-derived raw material.

(i) The resin composition of the present invention has high flame retardancy without substantially containing a halogen-containing flame retardant.
(ii) Since the organic phosphorus compound (component B) has an excellent flame retarding effect for a resin obtained from a plant-derived raw material, the resin composition of the present invention has V-2 flammability rating, particularly preferably V-0 flammability rating even when the content of the organic phosphorus compound is relatively low.
(iii) The resin composition of the present invention has such high heat resistance that the thermal deterioration of a resin obtained from a plant-derived raw material rarely occurs at the time of molding or using a molded article thereof due to the structure and
characteristic properties of the organic phosphorus compound used as a flame retardant. Therefore, the resin composition of the present invention has excellent flame retardancy, heat resistance and impact resistance all of which are well balanced.

Industrial Feasibility

The resin composition of the present invention is useful as a material for molding various molded articles such as home electric appliance parts, electric and electronic parts, auto parts, mechanical and electromechanical parts, and cosmetic containers.

## Claims

1. A flame retardant resin composition comprising:

(A) 100 parts by weight of a resin component (component A) containing at least 50 wt% of polylactic acid (component A-1);
(B) 1 to 100 parts by weight of an organic phosphorus compound represented by the following formula (1) (component B);
(C) 1 to 200 parts by weight of a filler (component C); and
(D) 1 to 100 parts by weight of an impact resistance modifier (component D).

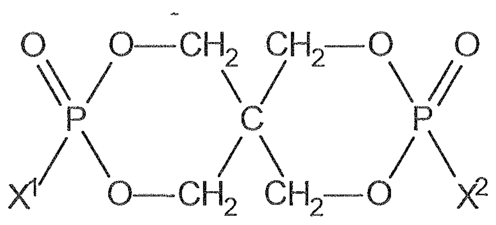

... (1)

(In the above formula, $X^1$ and $X^2$ are the same or different and each an aromatic substituted alkyl group represented by the following formula (2) :

$$-(AL)-(Ar)_n \quad \cdots (2)$$

(In the above formula, AL is a branched or linear aliphatic hydrocarbon group having 1 to 5 carbon atoms, Ar is a phenyl group, naphthyl group or anthryl group all of which may have a substituent, "n" is an integer of 1 to 3, and Ar may be bonded to any carbon atom contained in AL.))

2. The flame retardant resin composition according to claim 1, wherein the polylactic acid (component A-1) is stereocomplex polylactic acid which contains poly(L-lactic acid) (component $\alpha$-1) comprising not less

than 90 mol% of an L-lactic acid unit and poly(D-lactic acid) (component β-1) comprising not less than 90 mol% of a D-lactic acid unit, and the weight ratio of the component α-1 to the component β-1 is 10:90 to 90:10.

3. The flame retardant resin composition according to claim 1, wherein the component A-1 has a proportion of melting peaks at 195°C or higher of not less than 80 % of the total of all the melting peaks in the temperature elevation step in differential scanning calorimeter measurement.

4. The flame retardant resin composition according to claim 1 which comprises at least one resin (component A-2) selected from the group consisting of polyester resin (PEst) except for the component A-1, polyphenylene ether resin (PPE), polycarbonate resin (PC), polyamide resin (PA), polyolefin resin (PO), styrene-based resin, polyphenylene sulfide resin (PPS) and polyether imide resin (PEI) as the resin component (component A).

5. The flame retardant resin composition according to claim 1, wherein the organic phosphorus compound (component B) is at least one compound selected from the group consisting of organic phosphorus compounds represented by the following formula (3) and the following formula (4).

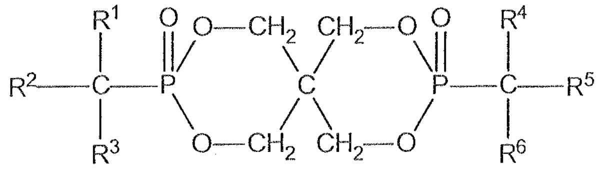

··· (3)

(In the above formula, $R^2$ and $R^5$ may be the same or different and are each a phenyl group, naphthyl group or anthryl group all of which may have a substituent, and $R^1$, $R^3$, $R^4$ and $R^6$ may be the same or different and are each a hydrogen atom, branched or linear alkyl group having 1 to 4 carbon atoms or substituent selected from phenyl group, naphthyl group and anthryl group all of which may have a substituent.)

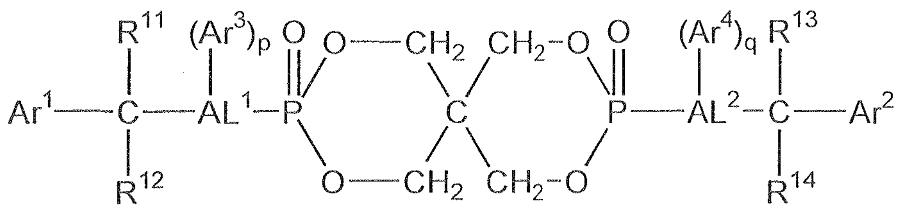

··· (4)

(In the above formula, $Ar^1$ and $Ar^2$ may be the same or different and are each a phenyl group, naphthyl group or anthryl group all of which may have a substituent in the aromatic ring, $R^{11}$, $R^{12}$, $R^{13}$ and $R^{14}$ may be the same or different and are each a hydrogen atom, aliphatic hydrocarbon group having 1 to 3 carbon atoms, or phenyl group, naphthyl group or anthryl group all of which may have a substituent in the aromatic ring, $AL^1$ and $AL^2$ may be the same or different and are each a branched or linear aliphatic hydrocarbon group having 1 to 4 carbon atoms, $Ar^3$ and $Ar^4$ may be the same or different and are each a phenyl group, naphthyl group or anthryl group all of which may have a substituent in the aromatic ring, "p" and "q" are each an integer of 0 to 3, and $Ar^3$ and $Ar^4$ may be boned to any carbon atom in $AL^1$ and $AL^2$, respectively.)

6. The flame retardant resin composition according to claim 1, wherein the organic phosphorus compound (component B) is represented by the following formula (5).

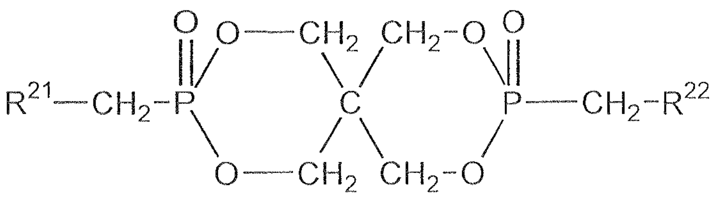

··· (5)

(In the above formula, $R^{21}$ and $R^{22}$ are the same or different and each a phenyl group, naphthyl group or anthryl group all of which may have a substituent in the aromatic ring.)

**7.** The flame retardant resin composition according to claim 1, wherein the organic phosphorus compound (component B) is a compound represented by the following formula (1-a).

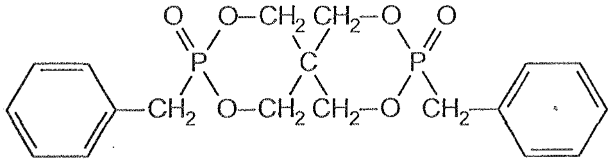

··· (1 − a)

**8.** The flame retardant resin composition according to claim 1, wherein the organic phosphorus compound (component B) is represented by the following formula (6).

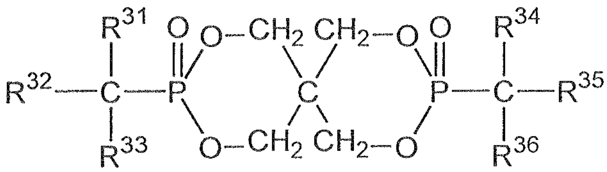

··· (6)

(In the above formula, $R^{31}$ and $R^{34}$ may be the same or different and are each a hydrogen atom or aliphatic hydrocarbon group having 1 to 3 carbon atoms, $R^{33}$ and $R^{36}$ may be the same or different and are each an aliphatic hydrocarbon group having 1 to 4 carbon atoms, and $R^{32}$ and $R^{35}$ may be the same or different and are each a phenyl group, naphthyl group or anthryl group all of which may have a substituent in the aromatic ring.)

**9.** The flame retardant resin composition according to claim 1, wherein the organic phosphorus compound (component B) is a compound represented by the following formula (1-b).

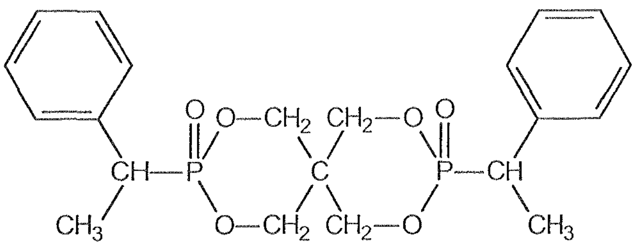

··· (1 − b)

**10.** The flame retardant resin composition according to claim 1, wherein the organic phosphorus compound (component B) is represented by the following formula (7).

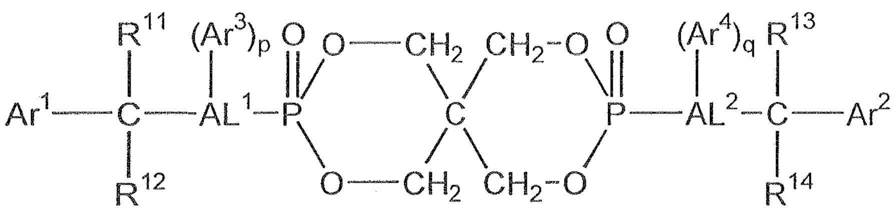

(7)

(In the above formula, $Ar^1$ and $Ar^2$ may be the same or different and are each a phenyl group, naphthyl group or anthryl group all of which may have a substituent in the aromatic ring, $R^{11}$, $R^{12}$, $R^{13}$ and $R^{14}$ may be the same or

different and are each a hydrogen atom, aliphatic hydrocarbon group having 1 to 3 carbon atoms, or phenyl group, naphthyl group or anthryl group all of which may have a substituent in the aromatic ring, $AL^1$ and $AL^2$ may be the same or different and are each a branched or linear aliphatic hydrocarbon group having 1 to 4 carbon atoms, $Ar^3$ and $Ar^4$ may be the same or different and are each a phenyl group, naphthyl group or anthryl group all which may have a substituent in the aromatic ring, "p" and "q" are each an integer of 0 to 3, and $Ar^3$ and $Ar^4$ may be bonded to any carbon atom in $AL^1$ and $AL^2$, respectively.)

**11.** The flame retardant resin composition according to claim 1, wherein the organic phosphorus compound (component B) is a compound represented by the following formula (1-c).

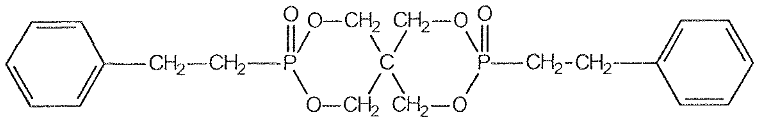

… (1 − c)

**12.** The flame retardant resin composition according to claim 1, wherein the organic phosphorus compound (component B) is represented by the following formula (8).

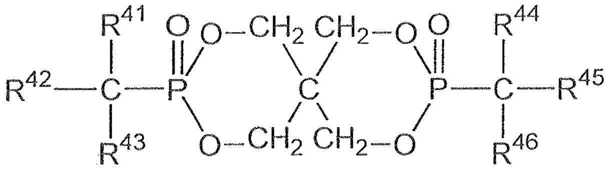

… (8)

(In the above formula, $R^{41}$ and $R^{44}$ may be the same or different and are each a hydrogen atom, aliphatic hydrocarbon group having 1 to 4 carbon atoms, or phenyl group, naphthyl group or anthryl group all of which may have a substituent in the aromatic ring, and $R^{42}$, $R^{43}$, $R^{45}$ and $R^{46}$ may be the same or different and are each a phenyl group, naphthyl group or anthryl group all of which may have a substituent in the aromatic ring.)

**13.** The flame retardant resin composition according to claim 1, wherein the organic phosphorus compound (component B) is a compound represented by the following formula (1-d).

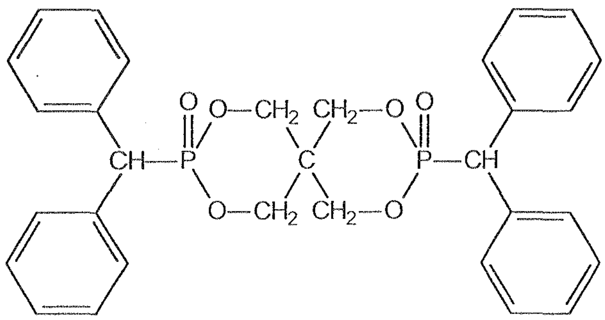

… (1 − d)

**14.** The flame retardant resin composition according to claim 1, wherein the impact resistance modifier (component D) contains at least 50 wt% of a hydrogenated styrene-based thermoplastic elastomer.

**15.** The flame retardant resin composition according to claim 1, wherein the impact resistance modifier (component D) contains at least 50 wt% of at least one hydrogenated styrene-based thermoplastic elastomer selected from styrene-ethylene-butylene-styrene terpolymer (SEBS), styrene-ethylene-propylene-styrene terpolymer (SEPS) and styrene-ethylene-propylene-styrene terpolymer (SEEPS).

**16.** The flame retardant resin composition according to claim 1, wherein the organic phosphorus compound (component B) has an acid value of not more than 0.7 mgKOH/g.

**17.** The flame retardant resin composition according to claim 1 which comprises 0.01 to 30 parts by weight of a crystallization accelerator based on 100 parts by weight of the resin component (component A).

**18.** The flame retardant resin composition according to claim 1 which attains at least UL-94 V-2 flammability rating.

**19.** A molded article formed from the flame retardant resin composition of claim 1.

**INTERNATIONAL SEARCH REPORT**

International application No.
PCT/JP2011/074885

A. CLASSIFICATION OF SUBJECT MATTER
*C08L67/04*(2006.01)i, *C08K3/00*(2006.01)i, *C08K5/5357*(2006.01)i, *C08L101/00* (2006.01)i

According to International Patent Classification (IPC) or to both national classification and IPC

B. FIELDS SEARCHED

Minimum documentation searched (classification system followed by classification symbols)
C08L67/04, C08K3/00, C08K5/5357, C08L101/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | WO 2009/145341 A1 (Teijin Chemicals Ltd.), 03 December 2009 (03.12.2009), claims; page 4, line 23 to page 5, line 5; page 6, lines 2 to 5; page 12, line 4 to page 13, line 8; examples & US 2011/0092623 A1 & EP 2287253 A1 & CN 102037078 A & KR 10-2011-0020230 A | 1-19 |
| Y | WO 2010/95699 A1 (Teijin Chemicals Ltd.), 26 August 2010 (26.08.2010), claims; page 10, line 4 to page 12, line 6; examples (Family: none) | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 November, 2011 (15.11.11) | 29 November, 2011 (29.11.11) |
| Name and mailing address of the ISA/ Japanese Patent Office | Authorized officer |
| Facsimile No. | Telephone No. |

Form PCT/ISA/210 (second sheet) (July 2009)

INTERNATIONAL SEARCH REPORT

International application No. PCT/JP2011/074885

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-18585 A (Teijin Chemicals Ltd.), 22 January 2004 (22.01.2004), claims; paragraphs [0091], [0092] (Family: none) | 1-19 |
| Y | JP 2008-308608 A (PS Japan Corp.), 25 December 2008 (25.12.2008), claims; paragraphs [0018] to [0022]; examples (Family: none) | 1-19 |
| Y | JP 2006-241445 A (Mitsui Chemicals, Inc.), 14 September 2006 (14.09.2006), claims; paragraphs [0088] to [0095] (Family: none) | 1-19 |
| P,X | JP 2010-275348 A (Teijin Chemicals Ltd.), 09 December 2010 (09.12.2010), claims & WO 2010/137632 A1 | 1,5-7,14-16, 18,19 |
| P,X | JP 2011-1513 A (Teijin Chemicals Ltd.), 06 January 2011 (06.01.2011), claims & WO 2010/137632 A1 | 1,5-7,14-16, 18,19 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001164014 A
- JP 2004277552 A
- JP 2005023260 A
- JP 2005139441 A
- JP 2007246730 A
- JP 2008019294 A
- US 1995970 A
- US 2362511 A
- US 2683136 A
- US 2758987 A
- US 3635956 A
- US 3797499 A
- US 5310865 A
- US 4057537 A
- US 5428126 A
- EP 0712880 A2
- JP 63241024 A
- US 3306874 A
- US 3847867 A
- US 3847869 A
- US 3850885 A
- US 3852242 A
- US 3855178 A
- US 3141032 A
- JP 54157156 A
- JP 53039698 A
- JP 2007301449 A


### Non-patent literature cited in the description


- *Macromolecules,* 1991, vol. 24, 5651
- *Makromol. Chem.,* 1990, vol. 1991, 2287